(19) Europäisches Patentamt / European Patent Office / Office européen des brevets

(11) **EP 4 300 984 B1**

(12) **EUROPEAN PATENT SPECIFICATION**

(45) Date of publication and mention
of the grant of the patent:
**11.12.2024 Bulletin 2024/50**

(21) Application number: **23179805.9**

(22) Date of filing: **16.06.2023**

(51) International Patent Classification (IPC):
*H04N 21/6437* (2011.01)   *H04N 21/236* (2011.01)
*H04N 21/81* (2011.01)   *H04N 21/854* (2011.01)

(52) Cooperative Patent Classification (CPC):
**H04N 21/236; H04N 21/6437; H04N 21/816;**
**H04N 21/85406**

(54) **A METHOD, AN APPARATUS AND A COMPUTER PROGRAM PRODUCT FOR MAPPING MEDIA BITSTREAM PARTITIONS IN REAL-TIME STREAMING**

*VERFAHREN, VORRICHTUNG UND COMPUTERPROGRAMMPRODUKT ZUR ABBILDUNG VON MEDIENBITSTROMPARTITIONEN IN ECHTZEIT-STREAMING*

*PROCÉDÉ, APPAREIL ET PRODUIT DE PROGRAMME INFORMATIQUE POUR MAPPER DES PARTITIONS DE FLUX BINAIRES MULTIMÉDIA EN DIFFUSION EN CONTINU EN TEMPS RÉEL*

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **29.06.2022 FI 20225595**

(43) Date of publication of application:
**03.01.2024 Bulletin 2024/01**

(73) Proprietor: **Nokia Technologies Oy**
**02610 Espoo (FI)**

(72) Inventors:
• **Ilola, Lauri**
**33610 Tampere (FI)**
• **Kammachi Sreedhar, Kashyap**
**33100 Tampere (FI)**
• **Kondrad, Lukasz**
**80331 Munich (DE)**

(74) Representative: **Berggren Oy**
**P.O. Box 16**
**Eteläinen Rautatiekatu 10A**
**00101 Helsinki (FI)**

(56) References cited:
**US-A1- 2022 006 999     US-A1- 2022 078 486**

• **ILOLA L. ET AL: "RTP Payload Format for Visual Volumetric Video-based Coding (V3C)", IETF DATATRACKER, 27 June 2022 (2022-06-27), pages 1 - 36, XP093068033, Retrieved from the Internet <URL:https://datatracker.ietf.org/doc/pdf/draft-ilola-avtcore-rtp-v3c-02> [retrieved on 20230727]**
• **"Information technology - Coded representation of immersive media - Part 5: Visual volumetric video-based coding (V3C) and video-based point cloud compression (V-PCC)", 18 June 2021 (2021-06-18), pages 1 - 331, XP082026977, Retrieved from the Internet <URL:https://api.iec.ch/harmonized/publications/download/1101252> [retrieved on 20210618]**

**Description**

Technical Field

The present solution generally relates to coding of volumetric video.

Background

Volumetric video data represents a three-dimensional (3D) scene or object, and can be used as input for AR (Augmented Reality), VR (Virtual Reality), and MR (Mixed Reality) applications. Such data describes geometry (Shape, size, position in 3D space) and respective attributes (e.g., color, opacity, reflectance, ...), and any possible temporal transformations of the geometry and attributes at given time instances (like frames in 2D video). Volumetric video can be generated from 3D models, also referred to as volumetric visual objects, i.e., CGI (Computer Generated Imagery), or captured from real-world scenes using a variety of capture solutions, e.g., multi-camera, laser scan, combination of video and dedicated depth sensors, and more. Also, a combination of CGI and real-world data is possible. Examples of representation formats for volumetric data comprise triangle meshes, point clouds, or voxels. Temporal information about the scene can be included in the form of individual capture instances, i.e., "frames" in 2D video, or other means, e.g., position of an object as a function of time.

The memo from Ilola L. ET AL: "RTP Payload Format for Visual Volumetric Video-based Coding (V3C)", IETF Datatracker, 27 June 2022, describes an RTP payload format for visual volumetric video-based coding (V3C).

Summary

The invention is defined by the appended independent claims and will be more readily understood after reading the following detailed description in conjunction with the accompanying drawings.

Description of the Drawings

In the following, various embodiments will be described in more detail with reference to the appended drawings, in which

Fig. 1      shows an example of a compression process of a volumetric video;

Fig. 2      shows an example of a de-compression process of a volumetric video;

Fig. 3      shows an example of a V3C bitstream originated from ISO/IEC 23090-5;

Fig. 4      shows an example of atlas frame partitioned in seven tiles;

Fig. 5      shows an example of an extension header;

Fig. 6      illustrates examples of possible mismatch between portions of V3C atlas component tiles indicated by tile id and portions of V3C video component partitions indicated by MCTS or Subpictures;

Fig. 7a     is a simplified block diagram of a sender device according to an embodiment;

Fig. 7b     is a simplified block diagram of a receiver device according to an embodiment;

Fig. 8a     is a flowchart illustrating an encoding method according to an embodiment;

Fig. 8b     is a flowchart illustrating an decoding method according to an embodiment; and

Fig. 9      shows an apparatus according to an embodiment.

Description of Example Embodiments

The following description and drawings are illustrative and are not to be construed as unnecessarily limiting. The specific details are provided for a thorough understanding of the disclosure. However, in certain instances, well-known or conventional details are not described in order to avoid obscuring the description. References to one or an embodiment in the present disclosure can be, but not necessarily are, reference to the same embodiment and such references mean at least one of the embodiments.

Reference in this specification to "one embodiment" or "an embodiment" means that a particular feature, structure, or characteristic described in connection with the embodiment in included in at least one embodiment of the disclosure.

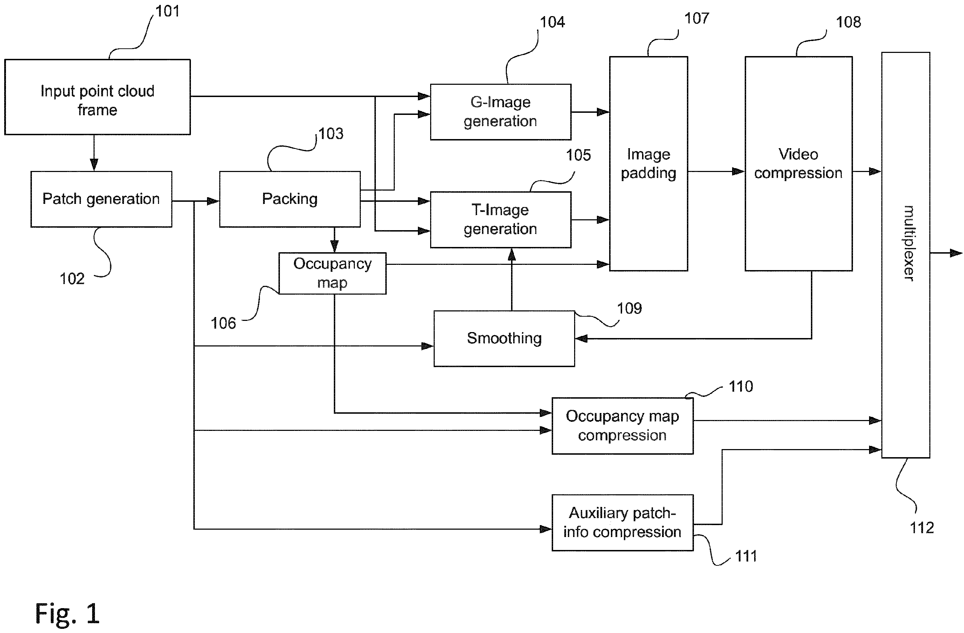

Figure 1 illustrates an overview of an example of a compression process of a volumetric video. Such process may be applied for example in MPEG Point Cloud Coding (PCC). The process starts with an input point cloud frame 101 that is provided for patch generation 102, geometry image generation 104 and texture image generation 105.

The patch generation 102 process aims at decomposing the point cloud into a minimum number of patches with smooth boundaries, while also minimizing the reconstruction error. For patch generation, the normal at every point can be estimated. An initial clustering of the point cloud can then be obtained by associating each point with one of the following six oriented planes, defined by their normals:

- (1.0, 0.0, 0.0),
- (0.0, 1.0, 0.0),
- (0.0, 0.0, 1.0),
- (-1.0, 0.0, 0.0),
- (0.0, -1.0, 0.0), and
- (0.0, 0.0, -1.0)

More precisely, each point may be associated with the plane that has the closest normal (i.e., maximizes the dot product of the point normal and the plane normal).

The initial clustering may then be refined by iteratively updating the cluster index associated with each point based on its normal and the cluster indices of its nearest neighbors. The final step may comprise extracting patches by applying a connected component extraction procedure.

Patch info determined at patch generation 102 for the input point cloud frame 101 is delivered to packing process 103, to geometry image generation 104 and to texture image generation 105. The packing process 103 aims at mapping the extracted patches onto a 2D plane, while trying to minimize the unused space, and guaranteeing that every $TxT$ (e.g., 16x16) block of the grid is associated with a unique patch. It should be noticed that T may be a user-defined parameter. Parameter T may be encoded in the bitstream and sent to the decoder.

The used simple packing strategy iteratively tries to insert patches into a $WxH$ grid. W and $H$ may be user-defined parameters, which correspond to the resolution of the geometry/texture images that will be encoded. The patch location is determined through an exhaustive search that is performed in raster scan order. The first location that can guarantee an overlapping-free insertion of the patch is selected and the grid cells covered by the patch are marked as used. If no empty space in the current resolution image can fit a patch, then the height $H$ of the grid may be temporarily doubled, and search is applied again. At the end of the process, $H$ is clipped so as to fit the used grid cells.

The geometry image generation 104 and the texture image generation 105 are configured to generate geometry images and texture images respectively. The image generation process may exploit the 3D to 2D mapping computed during the packing process to store the geometry and texture of the point cloud as images. In order to better handle the case of multiple points being projected to the same pixel, each patch may be projected onto two images, referred to as layers. For example, let $H(u, y)$ be the set of points of the current patch that get projected to the same pixel $(u, v)$. The first layer, also called a near layer, stores the point of $H(u, v)$ with the lowest depth $D0$. The second layer, referred to as the far layer, captures the point of $H(u, v)$ with the highest depth within the interval $[D0, D0+\Delta]$, where $\Delta$ is a user-defined parameter that describes the surface thickness. The generated videos may have the following characteristics:

- Geometry: WxH YUV420-8bit,
- Texture: WxH YUV420-8bit,

It is to be noticed that the geometry video is monochromatic. In addition, the texture generation procedure exploits the reconstructed/smoothed geometry in order to compute the colors to be associated with the re-sampled points.

The geometry images and the texture images may be provided to image padding 107. The image padding 107 may also receive as an input an occupancy map (OM) 106 to be used with the geometry images and texture images. The occupancy map 106 may comprise a binary map that indicates for each cell of the grid whether it belongs to the empty space or to the point cloud. In other words, the occupancy map (OM) may be a binary image of binary values where the occupied pixels and non-occupied pixels are distinguished and depicted respectively. The occupancy map may alternatively comprise a non-binary image allowing additional information to be stored in it. Therefore, the representative values of the DOM (Deep Occupancy Map) may comprise binary values or other values, for example integer values. It should be noticed that one cell of the 2D grid may produce a pixel during the image generation process. Such an occupancy map may be derived from the packing process 103.

The padding process 107 aims at filling the empty space between patches in order to generate a piecewise smooth image suited for video compression. For example, in a simple padding strategy, each block of *TxT* (e.g., 16x16) pixels is compressed independently. If the block is empty (i.e., unoccupied, i.e., all its pixels belong to empty space), then the pixels of the block are filled by copying either the last row or column of the previous *TxT* block in raster order. If the block is full (i.e., occupied, i.e., no empty pixels), nothing is done. If the block has both empty and filled pixels (i.e., edge block), then the empty pixels are iteratively filled with the average value of their non-empty neighbors.

The padded geometry images and padded texture images may be provided for video compression 108. The generated images/layers may be stored as video frames and compressed using for example the HM16.16 video codec according to the HM configurations provided as parameters. The video compression 108 also generates reconstructed geometry images to be provided for smoothing 109, wherein a smoothed geometry is determined based on the reconstructed geometry images and patch info from the patch generation 102. The smoothed geometry may be provided to texture image generation 105 to adapt the texture images.

The patch may be associated with auxiliary information being encoded/decoded for each patch as metadata. The auxiliary information may comprise index of the projection plane, 2D bounding box, 3D location of the patch.

For example, the following metadata may be encoded/decoded for every patch:

- index of the projection plane

   ∘ Index 0 for the planes (1.0, 0.0, 0.0) and (-1.0, 0.0, 0.0)
   ∘ Index 1 for the planes (0.0, 1.0, 0.0) and (0.0, -1.0, 0.0)
   ∘ Index 2 for the planes (0.0, 0.0, 1.0) and (0.0, 0.0, -1.0)

- 2D bounding box *(u0, v0, u1, v1)*
- 3D location *(x0, y0, z0)* of the patch represented in terms of depth $\delta0$, tangential shift *s0* and bitangential shift *r0*. According to the chosen projection planes, ($\delta0$, s0, r0) may be calculated as follows:

   ∘ Index 0, $\delta0$= *x0*, s0=z0 and *r0 = y0*
   ∘ Index 1, $\delta0$= *y0*, s0=z0 and *r0 = x0*
   ∘ Index 2, $\delta0$= *z0*, s0=x0 and *r0 = y0*

Also, mapping information providing for each *TxT* block its associated patch index may be encoded as follows:

- For each *TxT* block, let *L* be the ordered list of the indexes of the patches such that their 2D bounding box contains that block. The order in the list is the same as the order used to encode the 2D bounding boxes. *L* is called the list of candidate patches.
- The empty space between patches is considered as a patch and is assigned the special index 0, which is added to the candidate patches list of all the blocks.
- Let *I* be index of the patch, which the current *TxT* block belongs to, and let *J* be the position of *I* in *L*. Instead of explicitly coding the index *I*, its position *J* is arithmetically encoded instead, which leads to better compression efficiency.

The occupancy map consists of a binary map that indicates for each cell of the grid whether it belongs to the empty space or to the point cloud. One cell of the 2D grid produces a pixel during the image generation process.

The occupancy map compression 110 leverages the auxiliary information described in previous section, in order to detect the empty *TxT* blocks (i.e., blocks with patch index 0). The remaining blocks may be encoded as follows: The occupancy map can be encoded with a precision of a *B0×B0* blocks. *B0* is a configurable parameter. In order to achieve lossless encoding, *B0* may be set to 1. In practice *B0=2* or *B0=4* results in visually acceptable results, while significantly reducing the number of bits required to encode the occupancy map.

The compression process may comprise one or more of the following example operations:

- Binary values may be associated with *B0×B0* sub-blocks belonging to the same *TxT* block. A value 1 associated with a sub-block, if it contains at least a non-padded pixel, and 0 otherwise. If a sub-block has a value of 1 it is said to be full, otherwise it is an empty sub-block.
- If all the sub-blocks of a *T×T* block are full (i.e., have value 1). The block is said to be full. Otherwise, the block is said to be non-full.
- A binary information may be encoded for each *TxT* block to indicate whether it is full or not.

- If the block is non-full, an extra information indicating the location of the full/empty sub-blocks may be encoded as follows:

  ○ Different traversal orders may be defined for the sub-blocks, for example horizontally, vertically, or diagonally starting from top right or top left corner
  ○ The encoder chooses one of the traversal orders and may explicitly signal its index in the bitstream.
  ○ The binary values associated with the sub-blocks may be encoded by using a run-length encoding strategy.

    ▪ The binary value of the initial sub-block is encoded.
    ▪ Continuous runs of 0s and 1s are detected, while following the traversal order selected by the encoder.
    ▪ The number of detected runs is encoded.
    ▪ The length of each run, except of the last one, is also encoded.

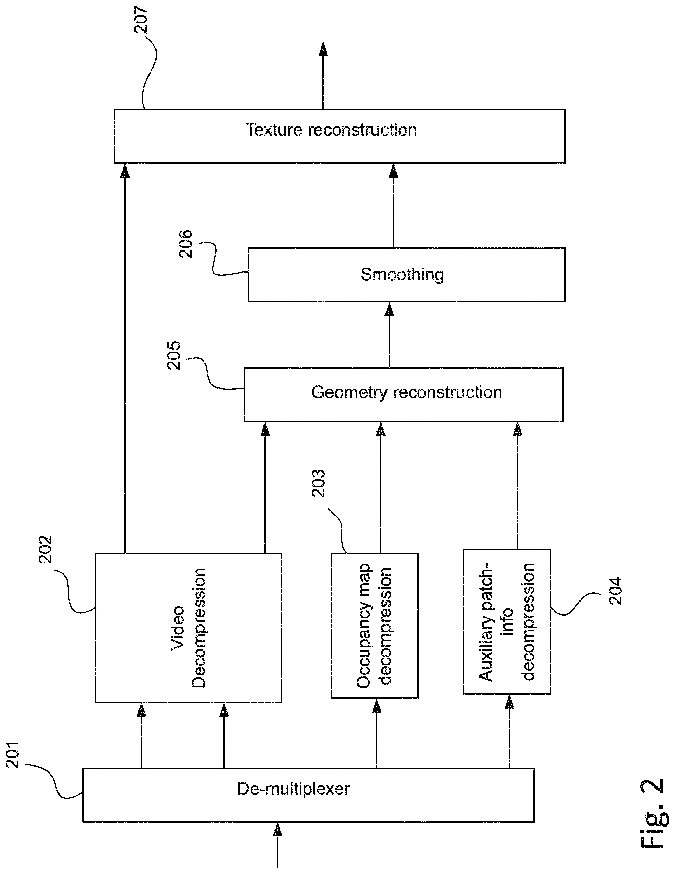

Figure 2 illustrates an overview of a de-compression process for MPEG Point Cloud Coding (PCC). A de-multiplexer 201 receives a compressed bitstream, and after de-multiplexing, provides compressed texture video and compressed geometry video to video decompression 202. In addition, the de-multiplexer 201 transmits compressed occupancy map to occupancy map decompression 203. It may also transmit a compressed auxiliary patch information to auxiliary patch-info compression 204. Decompressed geometry video from the video decompression 202 is delivered to geometry reconstruction 205, as are the decompressed occupancy map and decompressed auxiliary patch information. The point cloud geometry reconstruction 205 process exploits the occupancy map information in order to detect the non-empty pixels in the geometry/texture images/layers. The 3D positions of the points associated with those pixels may be computed by leveraging the auxiliary patch information and the geometry images.

The reconstructed geometry image may be provided for smoothing 206, which aims at alleviating potential discontinuities that may arise at the patch boundaries due to compression artifacts. The implemented approach moves boundary points to the centroid of their nearest neighbors. The smoothed geometry may be transmitted to texture reconstruction 207, which also receives a decompressed texture video from video decompression 202. The texture reconstruction 207 outputs a reconstructed point cloud. The texture values for the texture reconstruction are directly read from the texture images.

The point cloud geometry reconstruction process exploits the occupancy map information in order to detect the non-empty pixels in the geometry/texture images/layers. The 3D positions of the points associated with those pixels are computed by levering the auxiliary patch information and the geometry images. More precisely, let $P$ be the point associated with the pixel $(u, v)$ and let $(\delta 0, s0, r0)$ be the 3D location of the patch to which it belongs and $(u0, v0, u1, v1)$ its 2D bounding box. $P$ can be expressed in terms of depth $\delta(u, v)$, tangential shift $s(u, v)$ and bi-tangential shift $r(u, v)$ as follows:

$$\delta(u, v) = \delta 0 + g(u, v)$$

$$s(u, v) = s0 - u0 + u$$

$$r(u, v) = r0 - v0 + v$$

where $g(u, v)$ is the luma component of the geometry image.

For the texture reconstruction, the texture values can be directly read from the texture images. The result of the decoding process is a 3D point cloud reconstruction.

There are alternatives to capture and represent a volumetric frame. The format used to capture and represent the volumetric frame depends on the process to be performed on it, and the target application using the volumetric frame. As a first example a volumetric frame can be represented as a point cloud. A point cloud is a set of unstructured points in 3D space, where each point is characterized by its position in a 3D coordinate system (e.g., Euclidean), and some corresponding attributes (e.g., color information provided as RGBA value, or normal vectors). As a second example, a volumetric frame can be represented as images, with or without depth, captured from multiple viewpoints in 3D space. In other words, the volumetric video can be represented by one or more view frames (where a view is a projection of a volumetric scene on to a plane (the camera plane) using a real or virtual camera with known/computed extrinsic and intrinsic). Each view may be represented by a number of components (e.g., geometry, color, transparency, and occupancy picture), which may be part of the geometry picture or represented separately. As a third example, a volumetric frame can be represented as a mesh. Mesh is a collection of points, called vertices, and connectivity information between vertices, called edges. Vertices along with edges form faces. The combination of vertices, edges and faces can uniquely approximate shapes of objects.

Depending on the capture, a volumetric frame can provide viewers the ability to navigate a scene with six degrees of freedom, i.e., both translational and rotational movement of their viewing pose (which includes yaw, pitch, and roll). The data to be coded for a volumetric frame can also be significant, as a volumetric frame can contain many numbers of objects, and the positioning and movement of these objects in the scene can result in many dis-occluded regions. Furthermore, the interaction of the light and materials in objects and surfaces in a volumetric frame can generate complex light fields that can produce texture variations for even a slight change of pose.

A sequence of volumetric frames is a volumetric video. Due to large amount of information, storage and transmission of a volumetric video requires compression. A way to compress a volumetric frame can be to project the 3D geometry and related attributes into a collection of 2D images along with additional associated metadata. The projected 2D images can then be coded using 2D video and image coding technologies, for example ISO/IEC 14496-10 (H.264/AVC) and ISO/IEC 23008-2 (H.265/HEVC). The metadata can be coded with technologies specified in specification such as ISO/IEC 23090-5. The coded images and the associated metadata can be stored or transmitted to a client that can decode and render the 3D volumetric frame.

In the following, a short reference of ISO/IEC 23090-5 Visual Volumetric Video-based Coding (V3C) and Video-based Point Cloud Compression (V-PCC) 2nd Edition is given. ISO/IEC 23090-5 specifies the syntax, semantics, and process for coding volumetric video. The specified syntax is designed to be generic, so that it can be reused for a variety of applications. Point clouds, immersive video with depth, and mesh representations can all use ISO/IEC 23090-5 standard with extensions that deal with the specific nature of the final representation. The purpose of the specification is to define how to decode and interpret the associated data (for example atlas data in ISO/IEC 23090-5) which tells a renderer how to interpret 2D frames to reconstruct a volumetric frame.

Two applications of V3C (ISO/IEC 23090-5) have been defined, V-PCC (ISO/IEC 23090-5) and MIV (ISO/IEC 23090-12). MIV and V-PCC use number of V3C syntax elements with a slightly modified semantics. An example on how the generic syntax element can be differently interpreted by the application is pdu_projection_id.

In case of V-PCC, the syntax element pdu_projection_id specifies the index of the projection plane for the patch. There can be 6 or 18 projection planes in V-PCC, and they are implicit, i.e., pre-determined. In case of MIV, pdu_projection_id corresponds to a view ID, i.e., identifies which view the patch originated from. View IDs and their related information is explicitly provided in MIV view parameters list and may be tailored for each content.

MPEG 3DG (ISO SC29 WG7) group has started a work on a third application of V3C - the mesh compression. It is also envisaged that mesh coding will reuse V3C syntax as much as possible and can also slightly modify the semantics.

To differentiate between applications of V3C bitstream that allow a client to properly interpret the decoded data, V3C uses the ptl_profile toolset_idc parameter.

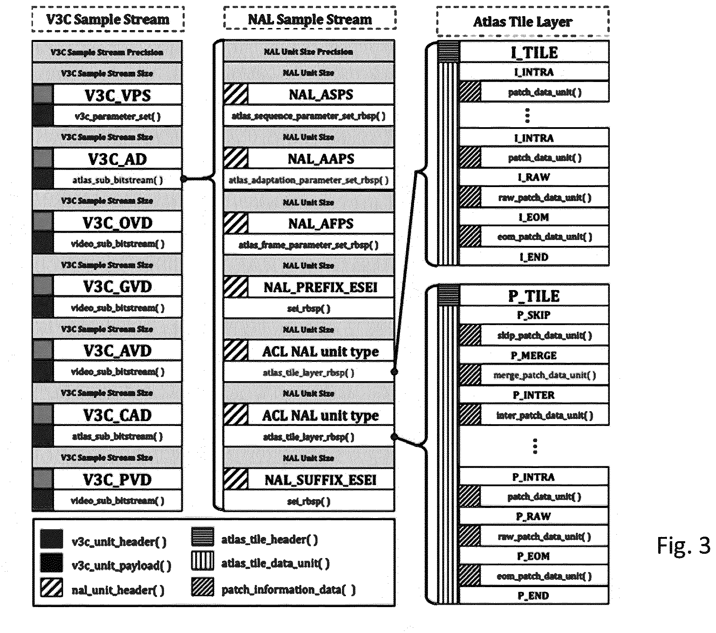

V3C bitstream is a sequence of bits that forms the representation of coded volumetric frames and the associated data making one or more coded V3C sequences (CVS). Where CVS is a sequence of bits identified and separated by appropriate delimiters, and is required to start with a VPS, includes a V3C unit, and contains one or more V3C units with atlas sub-bitstream or video sub-bitstream. This is illustrated in Figure 3. Video sub-bitstream and atlas sub-bitstreams can be referred to as V3C sub-bitstreams. A V3C unit header in conjunction with VPS information identify which V3C sub-bitstream a V3C unit contains and how to interpret it. An example of this is shown herein below:

| v3c_unit_header( ) { | Descriptor |
|---|---|
|     **vuh_unit_type** | u(5) |
|     if( vuh_unit_type == V3C_AVD ‖ vuh_unit_type == V3C_GVD ‖      vuh_unit_type == V3C_ OVD ‖ vuh_unit_type == V3C_AD ‖      vuh_unit_type == V3C_CAD ‖ vuh_unit_type == V3C_ PVD ) | |
|         **vuh_v3c_parameter_set_id** | u(4) |
|     if( vuh_unit_type == V3C_AVD ‖ vuh_unit_type == V3C_GVD ‖      vuh_unit_type == V3C_ OVD ‖ vuh_unit_type == V3C_AD ‖      vuh_unit_type == V3C_PVD ) | |
|         **vuh atlas id** | u(6) |
|     if( vuh_unit_type == V3C_AVD ) { | |
|         **vuh attribute index** | u(7) |
|         **vuh_attribute_partition_index** | u(5) |
|         **vuh_map_index** | u(4) |

(continued)

| | |
|---|---|
| **vuh_auxiliary_video_flag** | u(1) |
| } else if( vuh_unit_type == V3C_GVD ) { | |
| **vuh_map_index** | u(4) |
| **vuh_auxiliary_video_flag** | u(1) |
| **vuh reserved zero 12bits** | u(12) |
| } else if( vuh_unit_type == V3C_OVD ‖ vuh_unit_type == V3C_AD ‖       vuh_unit_type == V3C_PVD ) | |
| **vuh reserved zero 17bits** | u(17) |
| else if( vuh_unit_type == V3C_CAD ) | |
| vuh reserved zero 23bits | u(23) |
| else | |
| **vuh reserved zero 27bits** | u(27) |
| } | |

V3C bitstream can be stored according to Annex C of ISO/IEC 23090-5, which specifies syntax and semantics of a sample stream format to be used by applications that deliver some or all of the V3C unit stream as an ordered stream of bytes or bits within which the locations of V3C unit boundaries need to be identifiable from patterns in the data.

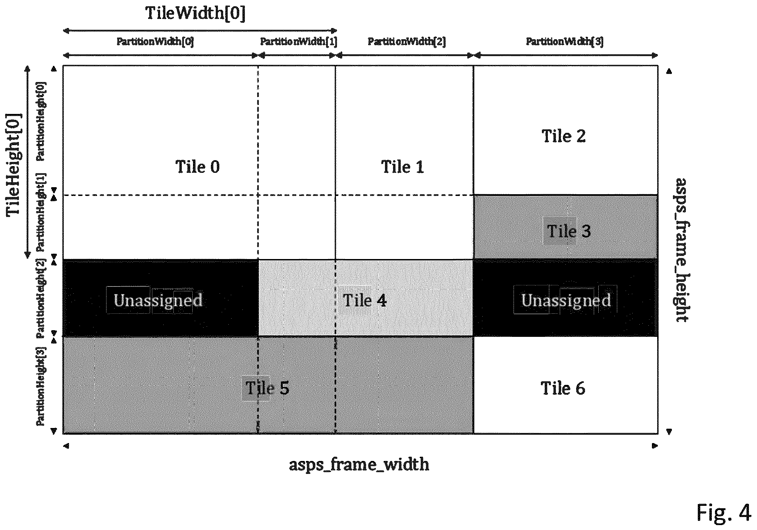

To enable parallelization, random access, as well as a variety of other functionalities, an atlas frame can be divided into one or more rectangular partitions that are referred to as tiles. Tiles are not allowed to overlap. An atlas frame may contain regions that are not associated with a tile. Figure 4 illustrates an example tile partitioning of an atlas frame, where atlas frame is divided into 16 tile partitions and seven tiles.

An atlas frame refers to a single access unit of an atlas sub-bitstream and may contain multiple atlas tiles and frame dependent parameters. One atlas frame can consist of multiple V3C NAL units, and a single V3C NAL unit contains one atlas tile. Therefore, an atlas tile is a portion of an atlas frame being identified by tile-id. An atlas tile cannot contain frame dependent parameters. Each atlas frame can be divided into multiple atlas tiles. In addition, an atlas frame contains other information like parameters that cannot be stored in atlas tiles.

ISO/IEC 23090-5 does not define how patches should be generated or arranged in tiles and leaves that to the encoder implementation to decide. Considering spatial partial access, it might make sense to store patches that correspond to same 3D space region in the same tiles. This would allow an application consuming a V3C bitstream to cull irrelevant tiles altogether from the rendering process. V3C supports this through definition of volumetric annotation SEI messages, which describe among other things dimensional parameters for tiles. V3C also provides a possibility to signal the constrains that were applied during tile creation through video usability information (VUI) parameter structure, and syntax elements such as vui_fixed_atlas_tile_structure_flag, vui_fixed_video_tile_structure_flag, and vui_constrained tiles across v3c componets_idc.

In V3C high level syntax, tile is identified by tile ID, which is represented by ath_id syntax element in atlas tile_header() structure.

| atlas_tile_header( ) { | **Descriptor** |
|---|---|
| if( nal_unit_type >= NAL_BLA_W_LP && nal_unit_type <= NAL_RSV_I RAP_ACL_29) | |
| **ath_no_output_of_prior_atlas_frames_flag** | u(1) |
| **ath_atlas_frame_parameter_set_id** | ue(v) |
| **ath_atlas_adaptation_parameter_set_id** | ue(v) |
| **ath_id** | u (v) |
| tileID = ath_id | |
| ... | |

NAL units in ISO/IEC 23090-5 are defined as described below:

| nal_unit( NumBytesInNalUnit ) { | Descriptor |
|---|---|
| nal_unit_header( ) | |
| NumBytesInRbsp = 0 | |
| for( i = 2; i < NumBytesInNalUnit; i++ ) | |
| **rbsp_byte**[ NumBytesInRbsp++ ] | b(8) |
| } | |

NumBytesInNalUnits specifies the size of the NAL unit in bytes. This value is required for decoding of the NAL unit. Some form of demarcation of NAL unit boundaries is necessary to enable inference of NumBytesInNalUnit.

rbsp_byte[i] is the i-th byte of an RBSP. An RBSP is specified as an ordered sequence of bytes as follows: The RBSP contains a string of data bits (SODB) as follows.

- If the SODB is empty (i.e., zero bits in length), the RBSP is also empty.
- Otherwise, the RBSP contains the SODB as follows:

    1) The first byte of the RBSP contains the first (most significant, left-most) eight bits of the SODB; the next byte of the RBSP contains the next eight bits of the SODB, etc., until fewer than eight bits of the SODB remain.
    2) The rbsp trailing_bits() syntax structure is present after the SODB as follows:

        a. The first (most significant, left-most) bits of the final RBSP byte contain the remaining bits of the SODB (if any).
        b. The next bit consists of a single bit equal to 1 (i.e., rbsp_stop_one_bit).
        c. When the rbsp_stop_one_bit is not the last bit of a byte-aligned byte, one or more bits equal to 0 (i.e., instances of rbsp_alignment_zero_bit) are present to result in byte alignment.

Syntax structures having these RBSP properties are denoted in the syntax table using an "_rbsp" suffix. These structures are carried within NAL units as the content of the rbsp_byte[i] data bytes.

The NAL unit header contains the fields are presented below:

| nal_unit_header() { | Descriptor |
|---|---|
| **nal_forbidden_zero_bit** | f(1) |
| **nal_unit_type** | u(6) |
| **nal_layer_id** | u(6) |
| **nal_temporal_id_plus1** | u(3) |
| } | |

nal_forbidden_zero_bit shall be equal to 0.

nal_unit_type specifies the type of the RBSP data structure contained in the NAL unit as specified in Table 4 in ISO/IEC 23090-5.

nal_layer_id specifies the identifier of the layer to which an ACL NAL unit belongs or the identifier of a layer to which a non-ACL NAL unit applies. The value of nal_layer_id shall be in the range of 0 to 62, inclusive. The value of 63 may be specified in the future by ISO/IEC.

The value of nal_layer_id shall be the same for all ACL NAL units of a coded atlas frame. The value of nal_layer_id of a coded atlas frame is the value of the nal_layer_id of the ACL NAL units of the coded atlas frame.

nal_temporal_id_plus1 minus 1 specifies a temporal identifier for the NAL unit. The value of nal_temporal_id_plus1 shall not be equal to 0.

VUI Parameters

V3C syntax allows signaling VUI parameters, as part of the atlas frame parameter set, which intend to inform the viewer how the V3C content should be displayed. The table below describes the syntax of the vui parameters, with the most relevant information relevant for this specification, also written out as semantics.

| vui_parameters( ) { | Descriptor |
|---|---|
| **vui_timing_info_present_flag** | u(1) |
| if( vui_timing_info_present_flag ) { | |
| **vui_num_units_in_tick** | u(32) |
| **vui_time_scale** | u(32) |

| | |
|---|---|
| **vui_poc_proportional_to_timing_flag** | u(1) |
| if( vui_poc_proportional_to_timing_flag ) | |
| **vui_num ticks_poc diff one minus1** | ue(v) |
| **vui_hrd_parameters_present flag** | u(1) |
| if( vui_hrd_parameters_present_flag ) | |
| hrd_parameters( 0) | |
| } | |
| **vui tile_restrictions_present flag** | u(1) |
| if( vui_tile_restrictions_present_flag ) { | |
| **vui_fixed_atlas_tile_structure_flag** | u(1) |
| **vui_fixed_video_tile_structure_flag** | u(1) |
| **vui_constrained_tiles_across_v3c_components_idc** | ue(v) |
| **vui max_num tiles_per atlas minus1** | ue(v) |
| } | |
| **vui max coded video_resolution_present flag** | u(1) |
| if( vui_max_coded_video_resolution_present_flag ) | |
| max_coded_video_resolution( ) | |
| **vui coordinate system_parameters_present flag** | u(1) |
| if( vui_coordinate_system_parameters_present_flag ) | |
| coordinate_system_parameters( ) | |
| **vui_unit in metres flag** | u(1) |
| **vui display_box_info_present flag** | u(1) |
| if( **vui_display_box_info_present_flag)** { | |
| for( d = 0; d < 3; d++ ) { | |
| **vui_display_box_origin**[ d ] | u (v) |
| **vui_display_box_size**[ d ] | u (v) |
| } | |

| | |
|---|---|
| } | |
| **vui anchor point_present flag** | u(1) |
| if( vui_anchor_point_present_flag ) | |

(continued)

| | |
|---|---|
| for( d = 0; d < 3; d++ ) | |
| **vui_anchor_point**[ d ] | u (v) |
| } | |

**vui_fixed_atlas_tile_structure_flag** equal to 1 indicates that all the atlas frames of the current atlas shall have the same tiling structure. vui_fixed_atlas_tile_structure_flag equal to 0 indicates that atlas frames of the current atlas may or may not have the same tiling structure. When the vui_fixed_atlas_tile_structure_flag syntax element is not present, it is inferred to be equal to 0.

**vui_fixed_video_tile_structure_flag** equal to 1 indicates that for each video sub-bitstream associated with the current atlas, all of its frames shall have the same tiling structure. vui_fixed_video_tile_structure_flag equal to 0 indicates that for each video sub-bitstream associated with the current atlas, frames may or may not have the same tiling structure. When the vui_fixed_video_tile_structure_flag syntax element is not present, it is inferred to be equal to 0.

**vui_constrained_tiles_across_v3c_components_idc** indicates whether any constraints apply to the sizes of tiles in the atlas sub-bitstream and the video tiles in the video sub-bitstreams, as specified in the table below.

| Value | Interpretation |
|---|---|
| 0 | Unconstrained |
| 1 | Proportionally constrained video tiles |
| 2 | Atlas based constrained video tiles with exact match |
| 3 | Atlas based constrained video tiles |
| 4 | Edge based constrained video tiles |

Values outside the 0 to 4 range, inclusive, are reserved for future use by ISO/IEC. It is a requirement of bitstream conformance that bitstreams conforming to this version shall not contain such values of vui_constrained tiles across v3c components_idc.

Video tiles can be independent coding units defined by the video or image coding specification and may vary in name according to such specification. Names could include slices, partitions, tiles, or sub-pictures, among others. Some specifications may not support multiple tiles, i.e. are limited to a single video tile.

vui_constrained_tiles_across_v3c_components_idc equal to 0 means that the tile sizes of the video are constrained only by the video coding specification used. The tile sizes of the atlas sub-bitstream are constrained by this document.

vui_constrained_tiles_across_v3c_components_idc equal to 1 means that the tile sizes of the video and atlas sub-bitstreams are constrained as follows:

- For each tile in the atlas sub-bitstream, there is a corresponding video tile for each video sub-bitstream present (attributes, geometry, and occupancy) such that the video tile, when scaled to the nominal format, as defined in Annex B.2, represents exactly the same area on the atlas as the corresponding atlas tile.

Let the width and height of the video be videoWidth and videoHeight, respectively. Let the width and height of the video tile be videoTileWidth and video-TileHeight, respectively. Let the width and height of the atlas tile be atlasTile-Width and atlasTileHeight, respectively. Then,

```
videoTileWidth = atlasTileWidth * videoWidth / asps_frame_width
```

```
videoTileHeight = atlasTileHeight * videoHeight / asps_frame_height
```

It shall be possible to decode each video tile that corresponds to a tile in the atlas sub-bitstream without reference to any information from other video tiles in that sub-bitstream.

vui_constrained_tiles_across_v3c_components_idc equal to 2 means that the tile sizes of the video and atlas sub-bitstreams are constrained as follows:

- For each tile in the atlas sub-bitstream, there is a set of video tiles for each video sub-bitstream present (occupancy, geometry, and attributes) such that the set of video tiles, when scaled to the nominal format, as defined in Annex B.2, together, represent exactly the same area on the atlas as the atlas tile.

It shall be possible to decode each set of video tiles that corresponds to a tile in the atlas sub-bitstream without reference to any information from video tiles from that sub-bitstream that are outside that set.

vui_constrained_tiles_across_v3c_components_idc equal to 3 means that the tile sizes of the video and atlas sub-bitstreams are constrained as follows:

- For each tile in the atlas sub-bitstream, there is a corresponding video tile for each video sub-bitstream present (occupancy, geometry, and attributes) such that the video tile, when scaled to the nominal format, as defined in Annex B.2, represents an area on the atlas that is greater than or equal to the area represented by the atlas tile.

The number of luma samples in the video tile shall be less than or equal to the number of samples in the atlas tile.

It shall be possible to decode each video tile that corresponds to a tile in the atlas sub-bitstream without reference to any information from other video tiles in that sub-bitstream.

vui_constrained_tiles_across_video_components_idc equal to 4 means that for all video sub-bitstreams, the tiling pattern, after scaling to the nominal format, as defined in Annex B.2, is considered, is such that one of the following shall hold for any pair of tiles, X from one sub-bitstream and Y from another sub bitstream:

- X and Y are non-overlapping

- X is completely contained in Y

- Y is completely contained in X.

It shall be possible to decode each tile in the video sub-bitstreams without reference to any information from other tiles in that video bitstream.

The sizes of the tiles in the auxiliary atlas sub-bitstream and the video tiles in the auxiliary video sub-bitstreams are also constrained depending on the value of vui_constrained_tiles_across_video_components_idc.

**vui_max_num_tiles_per_atlas_minus1** plus 1 indicates the maximum number of tiles present in the CAS.

A Real Time Transfer Protocol (RTP) is intended for an end-to-end, real-time transfer or streaming media and provides facilities for jitter compensation and detection of packet loss and out-of-order delivery. RTP allows data transfer to multiple destinations through IP multicast or to a specific destination through IP unicast. The majority of the RTP implementations are built on the User Datagram Protocol (UDP). Other transport protocols may also be utilized. RTP is used in together with other protocols such as H.323 and Real Time Streaming Protocol RTSP.

The RTP specification describes two protocols: RTP and RTCP. RTP is used for the transfer of multimedia data, and the RTCP is used to periodically send control information and QoS parameters.

RTP sessions may be initiated between client and server using a signalling protocol, such as H.323, the Session Initiation Protocol (SIP), or RTSP. These protocols may use the Session Description Protocol (RFC 8866) to specify the parameters for the sessions.

RTP is designed to carry a multitude of multimedia formats, which permits the development of new formats without revising the RTP standard. To this end, the information required by a specific application of the protocol is not included in the generic RTP header. For a class of applications (e.g., audio, video), an RTP profile may be defined. For a media format (e.g., a specific video coding format), an associated RTP payload format may be defined. Every instantiation of RTP in a particular application may require a profile and payload format specifications.

The profile defines the codecs used to encode the payload data and their mapping to payload format codecs in the protocol field Payload Type (PT) of the RTP header.

For example, RTP profile for audio and video conferences with minimal control is defined in RFC 3551. The profile defines a set of static payload type assignments, and a dynamic mechanism for mapping between a payload format, and a PT value using Session Description Protocol (SDP). The latter mechanism is used for newer video codec such as RTP payload format for H.264 Video defined in RFC 6184 or RTP Payload Format for High Efficiency Video Coding (HEVC) defined in RFC 7798.

An RTP session is established for each multimedia stream. Audio and video streams may use separate RTP sessions, enabling a receiver to selectively receive components of a particular stream. The RTP specification recommends even port number for RTP, and the use of the next odd port number of the associated RTCP session. A single port can be used for RTP and RTCP in applications that multiplex the protocols.

RTP packets are created at the application layer and handed to the transport layer for delivery. Each unit of RTP media data created by an application begins with the RTP packet header.

The RTP header has a minimum size of 12 bytes. After the header, optional header extensions may be present. This is followed by the RTP payload, the format of which is determined by the particular class of application. The fields in the header are as follows:

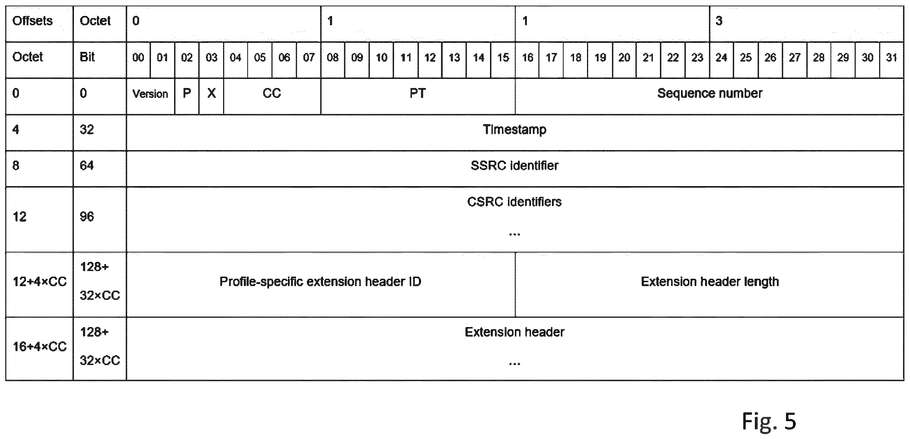

- Version: (2 bits) Indicates the version of the protocol.
- P (Padding): (1 bit) Used to indicate if there are extra padding bytes at the end of the RTP packet.
- X (Extension): (1 bit) Indicates the presence of an extension header between the header and payload data. The extension header is application or profile specific.
- CC (CSRC count): (4 bits) Contains the number of CSRC identifiers that follow the SSRC
- M (Marker): (1 bit) Signalling used at the application level in a profile-specific manner. If it is set, it means that the current data has some special relevance for the application.
- PT (Payload type): (7 bits) Indicates the format of the payload and thus determines its interpretation by the application.
- Sequence number: (16 bits) The sequence number is incremented for each RTP data packet sent and is to be used by the receiver to detect packet loss and to accommodate out-of-order delivery.
- Timestamp: (32 bits) Used by the receiver to play back the received samples at appropriate time and interval. When several media streams are present, the timestamps may be independent in each stream. The granularity of the timing is application specific. For example, video stream may use a 90 kHz clock. The clock granularity is one of the details that is specified in the RTP profile for an application.
- SSRC: (32 bits) Synchronization source identifier uniquely identifies the source of the stream. The synchronization sources within the same RTP session will be unique.
- CSRC: (32 bits each) Contributing source IDs enumerate contributing sources to a stream which has been generated from multiple sources.
- Header extension: (optional, presence indicated by Extension field) The first 32-bit word contains a profile-specific identifier (16 bits) and a length specifier (16 bits) that indicates the length of the extension in 32-bit units, excluding the 32 bits of the extension header. The extension header data is shown in Figure 5.

RTP payload contains the payload data associated with a payload header. An optional RTP payload header and other fields may exist in RTP payload that enables different packetization strategies for NAL unit-based media pipelines. Commonly at least the following packetization schemes exist:

- Single NAL unit packet, which contains only one NAL unit in each RTP packet;
- Aggregation NAL packet, which contains multiple NAL units in each RTP packet;
- Fragmentation unit, which allows to store one NAL unit in multiple RTP packets.

V3C atlas sub-bitstream data, consisting of NAL units, is stored in RTP payloads. Two-byte RTP payload header is used to store NAL unit header information along with other conditional information, such as decoding order number indicator and tile identifier. SDP is extended with new parameters for media level v3cmap attribute to provide tiling related information required to achieve partial delivery of V3C content over an RTP stream.

Different alternatives exist for encapsulating V3C NAL units of the atlas sub-bitstream in RTP payloads.

In an approach, a single NAL unit is stored in a single RTP payload, and NAL unit header is stored in RTP payload header unmodified. Optional decoding order number and tile-id fields may follow RTP payload header.

In another approach, two or more NAL units belonging to the same access unit are stored in a single RTP packet, henceforth known as single time aggregation packet (STAP). STPA contains an RTP payload header with NAL unit type (NUT) equal to 56, or other value in the unspecified range of V3C NAL units in ISO/IEC 23090-5. RTP payload header may be followed by a 16-bit tile identifier, which means that all NAL units in the aggregation units belong to the indicated tile. STPA may contain two or more aggregation units. Each aggregation unit may contain a 16-bit decoding order number and a 16-bit tile identifier field, followed by a mandatory 16-bit NAL unit size field. The rest of the aggregation units store unmodified NAL unit (including the header).

In another approach, two or more NAL units belonging in different access units are stored in a single RTP packet, henceforth known as multi-time aggregation packet (MTAP). MTAP contains RTP payload header with NAL unit type (NUT) equal to 57, or other value in the unspecified range of V3C NAL units in ISO/IEC 23090-5. RTP payload header may be followed by a 16-bit base decoding order number field and a 16-bit tile identifier field. MTAP may contain two or more aggregation units. Each aggregation unit contains a 16-bit timestamp offset field, followed by a conditional 8-bit decoding order number difference field and conditional 16-bit tile identifier field. Conditional fields are followed by a mandatory NAL unit size field. The rest of the aggregation unit stored unmodified NAL unit (including the header).

In another approach, a single NAL unit may be stored in two or more RTP packets, henceforth known as fragmentation units (FU). Each FU contains RTP payload header with NAL unit type (NUT) equal to 58, or other value in the unspecified range of V3C NAL units in ISO/IEC 23090-5. RTP payload header is followed by 8-bit FU header, which contains starting and ending indicators for the fragmentation unit along with the original NAL unit type of the fragmented NAL unit. Additional 16-bit decoding order number and 16-bit tile identifier field may be present in FU. Decoding order number and tile identifier fields may only be present in the FU where starting indicator is set to true. The rest of the fragmentation unit contains a slice of the fragmented NAL unit.

In this disclosure, the Session Description Protocol (SDP) is used as an example of a session specific file format. SDP is a format for describing multimedia communication sessions for the purposes of announcement and invitation. Its predominant use is in support of conversational and streaming media applications. SDP does not deliver any media streams itself, but is used between endpoints for negotiation of network metrics, media types, and other associated properties. The set of properties and parameters is called a session profile. SDP is extensible for the support of new media types and formats.

The Session Description Protocol describes a session as a group of fields in a text-based format, one field per line. The form of each field is as follows:

<character>=<value><CR><LF>

where <character> is a single case-sensitive character and <value> is structured text in a format that depends on the character. Values may be UTF-8 encoded. Whitespace is not allowed immediately to either side of the equal sign.

Session descriptions consist of three sections: session, timing, and media descriptions. Each description may contain multiple timing and media descriptions. Names are only unique within the associated syntactic construct.

Fields appear in the order, shown below; optional fields are marked with an asterisk:

v= (protocol version number, currently only 0)
o= (originator and session identifier: username, id, version number, network address)
s= (session name: mandatory with at least one UTF-8-encoded character)
i=* (session title or short information)
u=* (URI of description)
e=* (zero or more email address with optional name of contacts)
p=* (zero or more phone number with optional name of contacts)
c=* (connection information-not required if included in all media)
b=* (zero or more bandwidth information lines)
One or more time descriptions ("t=" and "r=" lines; see below)
z=* (time zone adjustments)
k=* (encryption key)
a=* (zero or more session attribute lines)
Zero or more Media descriptions (each one starting by an "m=" line; see below)

Time description (mandatory):

t= (time the session is active)
r=* (zero or more repeat times)

Media description (optional):

m= (media name and transport address)
i=* (media title or information field)
c=* (connection information - optional if included at session level)
b=* (zero or more bandwidth information lines)
k=* (encryption key)
a=* (zero or more media attribute lines - overriding the Session attribute lines)

Below is a sample session description from RFC 4566. This session is originated by the user "jdoe" at IPv4 address 10.47.16.5. Its name is "SDP Seminar" and extended session information ("A Seminar on the session description protocol") is included along with a link for additional information and an email address to contact the responsible party, Jane Doe. This session is specified to last two hours using NTP timestamps, with a connection address (which indicates the address clients should connect to or - when a multicast address is provided, as it is here - subscribe to) specified as IPv4 224.2.17.12 with a TTL of 127. Recipients of this session description are instructed to only receive media. Two media descriptions are provided, both using RTP Audio Video Profile. The first is an audio stream on port 49170 using RTP/AVP payload type 0 (defined by RFC 3551 as PCMU), and the second is a video stream on port 51372 using RTP/AVP payload type 99 (defined as "dynamic"). Finally, an attribute is included which maps RTP/AVP payload type 99 to format h263-1998 with a 90 kHz clock rate. RTCP ports for the audio and video streams of 49171 and 51373 respectively are implied.

```
v=0
o=jdoe 2890844526 2890842807 IN IP4 10.47.16.5
s=SDP Seminar
i=A Seminar on the session description protocol
u=http://www.example.com/seminars/sdp.pdf
e=j.doe@example.com (Jane Doe)
c=IN IP4 224.2.17.12/127
t=2873397496 2873404696
a=recvonly
m=audio 49170 RTP/AVP 0
m=video 51372 RTP/AVP 99
a=rtpmap:99 h263-1998/90000
```

SDP uses attributes to extend the core protocol. Attributes can appear within the Session or Media sections and are scoped accordingly as session-level or media-level. New attributes can be added to the standard through registration with IANA. A media description may contain any number of "a=" lines (attribute-fields) that are media description specific. Session-level attributes convey additional information that applies to the session as a whole rather than to individual media descriptions.

Attributes are either properties or values:

```
a=<attribute-name>
a=<attribute-name>:<attribute-value>
```

Examples of attributes defined in RFC8866 are "rtpmap" and "fmpt".

"rtpmap" attribute maps from an RTP payload type number (as used in an "m=" line) to an encoding name denoting the payload format to be used. It also provides information on the clock rate and encoding parameters. Up to one "a=rtpmap:" attribute can be defined for each media format specified. This can be the following:

```
m=audio 49230 RTP/AVP 96 97 98
a=rtpmap:96 L8/8000
a=rtpmap:97 L16/8000
a=rtpmap:98 L16/11025/2
```

In the example above, the media types are "audio/L8" and "audio/L16".

Parameters added to an "a=rtpmap:" attribute may only be those required for a session directory to make the choice of appropriate media to participate in a session. Codec-specific parameters may be added in other attributes, for example, "fmtp".

"fmtp" attribute allows parameters that are specific to a particular format to be conveyed in a way that SDP does not have to understand them. The format can be one of the formats specified for the media. Format-specific parameters, semicolon separated, may be any set of parameters required to be conveyed by SDP and given unchanged to the media tool that will use this format. At most one instance of this attribute is allowed for each format. An example is: a=fmtp:96 profile-level-id=42e016;max-mbps=108000;max-fs=3600

For example RFC7798 defines the following sprop-vps, sprop-sps, sprop-pps, profile-space, profile-id, tier-flag, level-id, interop-constraints, profile-compatibility-indicator, sprop-sub-layer-id, recv-sub-layer-id, max-recv-level-id, tx-mode, max-lsr, max-lps, max-cpb, max-dpb, max-br, max-tr, max-tc, max-fps, sprop-max-don-diff, sprop-depack-buf-nalus, sprop-depack-buf-bytes, depack-buf-cap, sprop-segmentation-id, sprop-spatial-segmentation-idc, dec-parallel-cap, and include-dph.

Video codec consists of an encoder that transforms the input video into a compressed representation suited for storage/transmission and a decoder that can uncompress the compressed video representation back into a viewable form. A video encoder and/or a video decoder may also be separate from each other, i.e. need not form a codec. Typically, the encoder discards some information in the original video sequence in order to represent the video in a more compact form (that is, at a lower bitrate).

Typical hybrid video encoders, for example many encoder implementations of ITU-T H.263 and H.264, encode the video information in two phases. Firstly, pixel values in a certain picture area (or "block") are predicted for example by motion compensation means finding and indicating an area in one of the previously coded video frames that corresponds closely to the block being coded or by spatial means using the pixel values around the block to be coded in a specified manner. Secondly, the prediction error, i.e., the difference between the predicted block of pixels and the original block of pixels, is coded. This is typically done by transforming the difference in pixel values using a specified transform (e.g. Discrete Cosine Transform (DCT) or a variant of it), quantizing the coefficients and entropy coding the quantized coefficients. By varying the fidelity of the quantization process, the encoder can control the balance between the accuracy of the pixel representation (picture quality) and size of the resulting coded video representation (file size or transmission bitrate).

In temporal prediction, the sources of prediction are previously decoded pictures (a.k.a. reference pictures). In intra block copy (IBC; a.k.a. intra-block-copy prediction), prediction is applied similarly to temporal prediction, but the reference picture is the current picture and only previously decoded samples can be referred in the prediction process. Inter-layer or inter-view prediction may be applied similarly to temporal prediction, but the reference picture is a decoded picture from another scalable layer or from another view, respectively. In some cases, inter prediction may refer to temporal prediction only, while in other cases inter prediction may refer collectively to temporal prediction and any of intra block copy, inter-layer prediction, and inter-view prediction provided that they are performed with the same or similar process than temporal prediction. Inter prediction or temporal prediction may sometimes be referred to as motion compensation or motion-compensated prediction.

Inter prediction, which may also be referred to as temporal prediction, motion compensation, or motion-compensated prediction, reduces temporal redundancy. In inter prediction the sources of prediction are previously decoded pictures. Intra prediction utilizes the fact that adjacent pixels within the same picture are likely to be correlated. Intra prediction can be performed in spatial or transform domain, i.e., either sample values or transform coefficients can be predicted. Intra prediction is typically exploited in intra coding, where no inter prediction is applied.

One outcome of the coding procedure is a set of coding parameters, such as motion vectors and quantized transform coefficients. Many parameters can be entropy-coded more efficiently if they are predicted first from spatially or temporally neighbouring parameters. For example, a motion vector may be predicted from spatially adjacent motion vectors and only the difference relative to the motion vector predictor may be coded. Prediction of coding parameters and intra prediction may be collectively referred to as in-picture prediction.

The H.264/AVC standard was developed by the Joint Video Team (JVT) of the Video Coding Experts Group (VCEG) of the Telecommunications Standardization Sector of International Telecommunication Union (ITU-T) and the Moving Picture Experts Group (MPEG) of International Organisation for Standardization (ISO) / International Electrotechnical Commission (IEC). The H.264/AVC standard is published by both parent standardization organizations, and it is referred to as ITU-T Recommendation H.264 and ISO/IEC International Standard 14496-10, also known as MPEG-4 Part 10 Advanced Video Coding (AVC). There have been multiple versions of the H.264/AVC standard, integrating new extensions or features to the specification. These extensions include Scalable Video Coding (SVC) and Multiview Video Coding (MVC).

Version 1 of the High Efficiency Video Coding (H.265/HEVC a.k.a. HEVC) standard was developed by the Joint Collaborative Team - Video Coding (JCT-VC) of VCEG and MPEG. The standard was published by both parent standardization organizations, and it is referred to as ITU-T Recommendation H.265 and ISO/IEC International Standard 23008-2, also known as MPEG-H Part 2 High Efficiency Video Coding (HEVC). Later versions of H.265/HEVC included scalable, multiview, fidelity range extensions, three-dimensional, and screen content coding extensions which may be abbreviated SHVC, MV-HEVC, REXT, 3D-HEVC, and SCC, respectively.

SHVC, MV-HEVC, and 3D-HEVC use a common basis specification, specified in Annex F of the version 2 of the HEVC standard. This common basis comprises for example high-level syntax and semantics, e.g. specifying some of the characteristics of the layers of the bitstream, such as inter-layer dependencies, as well as decoding processes, such as reference picture list construction including inter-layer reference pictures and picture order count derivation for multi-layer bitstream. Annex F may also be used in potential subsequent multi-layer extensions of HEVC. It is to be understood that even though a video encoder, a video decoder, encoding methods, decoding methods, bitstream structures, and/or embodiments may be described in the following with reference to specific extensions, such as SHVC and/or MV-HEVC, they are generally applicable to any multi-layer extensions of HEVC, and even more generally to any multi-layer video coding scheme.

The Versatile Video Coding standard (which may be abbreviated WC, H.266, or H.266/VVC) was developed by the Joint Video Experts Team (JVET), which is a collaboration between the ISO/IEC MPEG and ITU-T VCEG. Extensions to VVC are presently under development.

Some key definitions, bitstream and coding structures, and concepts of H.264/AVC and HEVC are described in this section as an example of a video encoder, decoder, encoding method, decoding method, and a bitstream structure, wherein the embodiments may be implemented. Some of the key definitions, bitstream and coding structures, and concepts of H.264/AVC are the same as in HEVC - hence, they are described below jointly. The aspects of the invention are not limited to H.264/AVC or HEVC, but rather the description is given for one possible basis on top of which the invention may be partly or fully realized. Many aspects described below in the context of H.264/AVC or HEVC may apply to WC, and the aspects of the invention may hence be applied to VVC.

Similarly to many earlier video coding standards, the bitstream syntax and semantics as well as the decoding process for error-free bitstreams are specified in H.264/AVC and HEVC. The encoding process is not specified, but encoders should generate conforming bitstreams. Bitstream and decoder conformance can be verified with the Hypothetical Reference Decoder (HRD). The standards contain coding tools that help in coping with transmission errors and losses, but the use of the tools in encoding is optional and no decoding process has been specified for erroneous bitstreams.

The elementary unit for the input to an H.264/AVC or HEVC encoder and the output of an H.264/AVC or HEVC decoder, respectively, is a picture. A picture given as an input to an encoder may also be referred to as a source picture, and a picture decoded by a decoder may be referred to as a decoded picture.

The source and decoded pictures are each comprised of one or more sample arrays, such as one of the following sets of sample arrays:

- Luma (Y) only (monochrome).
- Luma and two chroma (YCbCr or YCgCo).
- Green, Blue and Red (GBR, also known as RGB).
- Arrays representing other unspecified monochrome or tri-stimulus color samplings (for example, YZX, also known as XYZ).

In the following, these arrays may be referred to as luma (or L or Y) and chroma, where the two chroma arrays may be referred to as Cb and Cr; regardless of the actual colour representation method in use. The actual colour representation method in use can be indicated e.g. in a coded bitstream e.g. using the Video Usability Information (VUI) syntax of H.264/AVC and/or HEVC. A component may be defined as an array or a single sample from one of the three sample arrays (luma and two chroma) or the array or a single sample of the array that compose a picture in monochrome format.

In H.264/AVC and HEVC, a picture may either be a frame or a field. A frame comprises a matrix of luma samples and possibly the corresponding chroma samples. A field is a set of alternate sample rows of a frame and may be used as encoder input, when the source signal is interlaced. Chroma sample arrays may be absent (and hence monochrome sampling may be in use) or chroma sample arrays may be subsampled when compared to luma sample arrays. Chroma formats may be summarized as follows:

- In monochrome sampling there is only one sample array, which may be nominally considered the luma array.
- In 4:2:0 sampling, each of the two chroma arrays has half the height and half the width of the luma array.
- In 4:2:2 sampling, each of the two chroma arrays has the same height and half the width of the luma array.
- In 4:4:4 sampling when no separate color planes are in use, each of the two chroma arrays has the same height and width as the luma array.

In H.264/AVC and HEVC, it is possible to code sample arrays as separate colour planes into the bitstream and respectively decode separately coded colour planes from the bitstream. When separate colour planes are in use, each one of them is separately processed (by the encoder and/or the decoder) as a picture with monochrome sampling.

A partitioning may be defined as a division of a set into subsets such that each element of the set is in exactly one of the subsets.

When describing the operation of HEVC encoding and/or decoding, the following terms may be used. A coding block may be defined as an NxN block of samples for some value of N such that the division of a coding tree block into coding blocks is a partitioning. A coding tree block (CTB) may be defined as an NxN block of samples for some value of N such that the division of a component into coding tree blocks is a partitioning. A coding tree unit (CTU) may be defined as a coding tree block of luma samples, two corresponding coding tree blocks of chroma samples of a picture that has three sample arrays, or a coding tree block of samples of a monochrome picture or a picture that is coded using three separate colour planes and syntax structures used to code the samples. A coding unit (CU) may be defined as a coding block of luma samples, two corresponding coding blocks of chroma samples of a picture that has three sample arrays, or a coding block of samples of a monochrome picture or a picture that is coded using three separate colour planes and syntax structures used to code the samples. A CU with the maximum allowed size may be named as LCU (largest coding unit) or coding tree unit (CTU) and the video picture is divided into non-overlapping LCUs.

A CU consists of one or more prediction units (PU) defining the prediction process for the samples within the CU and one or more transform units (TU) defining the prediction error coding process for the samples in the said CU. Typically, a CU consists of a square block of samples with a size selectable from a predefined set of possible CU sizes.

Each PU and TU can further be split into smaller PUs and TUs in order to increase granularity of the prediction and prediction error coding processes, respectively. Each PU has prediction information associated with it defining what kind of a prediction is to be applied for the pixels within that PU (e.g. motion vector information for inter predicted PUs and intra prediction directionality information for intra predicted PUs).

Each TU can be associated with information describing the prediction error decoding process for the samples within the said TU (including e.g. DCT coefficient information). It is typically signalled at CU level whether prediction error coding is applied or not for each CU. In the case there is no prediction error residual associated with the CU, it can be considered there are no TUs for the said CU. The division of the image into CUs, and division of CUs into PUs and TUs is typically signalled in the bitstream allowing the decoder to reproduce the intended structure of these units.

In HEVC, a picture can be partitioned in tiles, which are rectangular and contain an integer number of LCUs. In HEVC, the partitioning to tiles forms a regular grid, where heights and widths of tiles differ from each other by one LCU at the maximum. In HEVC, a slice is defined to be an integer number of coding tree units contained in one independent slice segment and all subsequent dependent slice segments (if any) that precede the next independent slice segment (if any) within the same access unit. In HEVC, a slice segment is defined to be an integer number of coding tree units ordered consecutively in the tile scan order and contained in a single NAL unit. The division of each picture into slice segments is a partitioning. In HEVC, an independent slice segment is defined to be a slice segment for which the values of the syntax elements of the slice segment header are not inferred from the values for a preceding slice segment, and a dependent slice segment is defined to be a slice segment for which the values of some syntax elements of the slice segment header are inferred from the values for the preceding independent slice segment in decoding order. In HEVC, a slice header is defined to be the slice segment header of the independent slice segment that is a current slice segment or is the independent slice segment that precedes a current dependent slice segment, and a slice segment header is defined to be a part of a coded slice segment containing the data elements pertaining to the first or all coding tree units represented in the slice segment. The CUs are scanned in the raster scan order of LCUs within tiles or within a picture, if tiles are not in use. Within an LCU, the CUs have a specific scan order.

An intra-coded slice (also called I slice) is such that only contains intra-coded blocks. The syntax of an I slice may exclude syntax elements that are related to inter prediction. An inter-coded slice is such where blocks can be intra- or inter-coded. Inter-coded slices may further be categorized into P and B slices, where P slices are such that blocks may be intra-coded or inter-coded but only using uni-prediction, and blocks in B slices may be intra-coded or inter-coded with uni- or bi-prediction.

A motion-constrained tile set (MCTS) is such that the inter prediction process is constrained in encoding such that no sample value outside the motion-constrained tile set, and no sample value at a fractional sample position that is derived using one or more sample values outside the motion-constrained tile set, is used for inter prediction of any sample within the motion-constrained tile set. Additionally, the encoding of an MCTS is constrained in a manner that motion vector candidates are not derived from blocks outside the MCTS. This may be enforced by turning off temporal motion vector prediction of HEVC, or by disallowing the encoder to use the TMVP candidate or any motion vector prediction candidate following the TMVP candidate in the merge or AMVP candidate list for PUs located directly left of the right tile boundary of the MCTS except the last one at the bottom right of the MCTS. In general, an MCTS may be defined to be a tile set that is independent of any sample values and coded data, such as motion vectors, that are outside the MCTS. In some cases, an MCTS may be required to form a rectangular area. It should be understood that depending on the context, an MCTS may refer to the tile set within a picture or to the respective tile set in a sequence of pictures. The respective tile set may be, but in general need not be, collocated in the sequence of pictures.

It is noted that sample locations used in inter prediction may be saturated by the encoding and/or decoding process so that a location that would be outside the picture otherwise is saturated to point to the corresponding boundary sample of the picture. Hence, if a tile boundary is also a picture boundary, in some use cases, encoders may allow motion vectors to effectively cross that boundary or a motion vector to effectively cause fractional sample interpolation that would refer to a location outside that boundary, since the sample locations are saturated onto the boundary. In other use cases, specifically if a coded tile may be extracted from a bitstream where it is located on a position adjacent to a picture boundary to another bitstream where the tile is located on a position that is not adjacent to a picture boundary, encoders may constrain the motion vectors on picture boundaries similarly to any MCTS boundaries.

The temporal motion-constrained tile sets SEI message of HEVC can be used to indicate the presence of motion-constrained tile sets in the bitstream.

The decoder reconstructs the output video by applying prediction means similar to the encoder to form a predicted representation of the pixel blocks (using the motion or spatial information created by the encoder and stored in the compressed representation) and prediction error decoding (inverse operation of the prediction error coding recovering the quantized prediction error signal in spatial pixel domain). After applying prediction and prediction error decoding means the decoder sums up the prediction and prediction error signals (pixel values) to form the output video frame. The decoder (and encoder) can also apply additional filtering means to improve the quality of the output video before passing it for display and/or storing it as prediction reference for the forthcoming frames in the video sequence.

The filtering may, for example, include one more of the following: deblocking, sample adaptive offset (SAO), and/or adaptive loop filtering (ALF). H.264/AVC includes a deblocking, whereas HEVC includes both deblocking and SAO.

In typical video codecs the motion information is indicated with motion vectors associated with each motion compensated image block, such as a prediction unit. Each of these motion vectors represents the displacement of the image block in the picture to be coded (in the encoder side) or decoded (in the decoder side) and the prediction source block in one of the previously coded or decoded pictures. In order to represent motion vectors efficiently those are typically coded differentially with respect to block specific predicted motion vectors. In typical video codecs the predicted motion vectors are created in a predefined way, for example calculating the median of the encoded or decoded motion vectors of the adjacent blocks. Another way to create motion vector predictions is to generate a list of candidate predictions from adjacent blocks and/or co-located blocks in temporal reference pictures and signalling the chosen candidate as the motion vector predictor. In addition to predicting the motion vector values, it can be predicted which reference picture(s) are used for motion-compensated prediction and this prediction information may be represented for example by a reference index of previously coded/decoded picture. The reference index is typically predicted from adjacent blocks and/or co-located blocks in temporal reference picture. Moreover, typical high efficiency video codecs employ an additional motion information coding/decoding mechanism, often called merging/merge mode, where all the motion field information, which includes motion vector and corresponding reference picture index for each available reference picture list, is predicted and used without any modification/correction. Similarly, predicting the motion field information is carried out using the motion field information of adjacent blocks and/or co-located blocks in temporal reference pictures and the used motion field information is signalled among a list of motion field candidate list filled with motion field information of available adjacent/co-located blocks.

In typical video codecs the prediction residual after motion compensation is first transformed with a transform kernel (like DCT) and then coded. The reason for this is that often there still exists some correlation among the residual and transform can in many cases help reduce this correlation and provide more efficient coding.

Typical video encoders utilize Lagrangian cost functions to find optimal coding modes, e.g. the desired coding mode for a block and associated motion vectors. This kind of cost function uses a weighting factor $\lambda$ to tie together the (exact or estimated) image distortion due to lossy coding methods and the (exact or estimated) amount of information that is required to represent the pixel values in an image area:

$$C = D + \lambda R, \qquad\qquad (1)$$

where C is the Lagrangian cost to be minimized, D is the image distortion (e.g. Mean Squared Error) with the mode and motion vectors considered, and R the number of bits needed to represent the required data to reconstruct the image block in the decoder (including the amount of data to represent the candidate motion vectors).

Video coding standards and specifications may allow encoders to divide a coded picture to coded slices or alike. In-picture prediction is typically disabled across slice boundaries. Thus, slices can be regarded as a way to split a coded picture to independently decodable pieces. In H.264/AVC and HEVC, in-picture prediction may be disabled across slice boundaries. Thus, slices can be regarded as a way to split a coded picture into independently decodable pieces, and slices are therefore often regarded as elementary units for transmission. In many cases, encoders may indicate in the bitstream which types of in-picture prediction are turned off across slice boundaries, and the decoder operation takes this information into account for example when concluding which prediction sources are available. For example, samples from a neighbouring CU may be regarded as unavailable for intra prediction, if the neighbouring CU resides in a different slice.

An elementary unit for the output of an H.264/AVC or HEVC encoder and the input of an H.264/AVC or HEVC decoder, respectively, is a Network Abstraction Layer (NAL) unit. For transport over packet-oriented networks or storage into structured files, NAL units may be encapsulated into packets or similar structures. A bytestream format has been specified in H.264/AVC and HEVC for transmission or storage environments that do not provide framing structures. The bytestream format separates NAL units from each other by attaching a start code in front of each NAL unit. To avoid false detection of NAL unit boundaries, encoders run a byte-oriented start code emulation prevention algorithm, which adds an emulation prevention byte to the NAL unit payload if a start code would have occurred otherwise. In order to enable straightforward gateway operation between packet- and stream-oriented systems, start code emulation prevention may always be performed regardless of whether the bytestream format is in use or not. A NAL unit may be defined as a syntax structure containing an indication of the type of data to follow and bytes containing that data in the form of an RBSP interspersed as necessary with emulation prevention bytes. A raw byte sequence payload (RBSP) may be defined as a syntax structure containing an integer number of bytes that is encapsulated in a NAL unit. An RBSP is either empty or has the form of a string of data bits containing syntax elements followed by an RBSP stop bit and followed by zero or more subsequent bits equal to 0.

NAL units consist of a header and payload. In H.264/AVC and HEVC, the NAL unit header indicates the type of the NAL unit. In HEVC, a two-byte NAL unit header is used for all specified NAL unit types. The NAL unit header contains one reserved bit, a six-bit NAL unit type indication, a three-bit nuh_temporal_id_plus1 indication for temporal level (may be required to be greater than or equal to 1) and a six-bit nuh_layer_id syntax element. The temporal_id_plus1 syntax element may be regarded as a temporal identifier for the NAL unit, and a zero-based TemporalId variable may be derived as follows: TemporalId = temporal_id_plus1 - 1. The abbreviation TID may be used to interchangeably with the TemporalId variable. TemporalId equal to 0 corresponds to the lowest temporal level. The value of temporal_id_plus1 is required to be non-zero in order to avoid start code emulation involving the two NAL unit header bytes. The bitstream created by excluding all VCL NAL units having a TemporalId greater than or equal to a selected value and including all other VCL NAL units remains conforming. Consequently, a picture having TemporalId equal to tid_value does not use any picture having a TemporalId greater than tid_value as inter prediction reference. A sub-layer or a temporal sub-layer may be defined to be a temporal scalable layer (or a temporal layer, TL) of a temporal scalable bitstream, consisting of VCL NAL units with a particular value of the TemporalId variable and the associated non-VCL NAL units. nuh_layer_id can be understood as a scalability layer identifier.

NAL units can be categorized into Video Coding Layer (VCL) NAL units and non-VCL NAL units. VCL NAL units are typically coded slice NAL units. In HEVC, VCL NAL units contain syntax elements representing one or more CU.

In HEVC, abbreviations for picture types may be defined as follows: trailing (TRAIL) picture, Temporal Sub-layer Access (TSA), Step-wise Temporal Sub-layer Access (STSA), Random Access Decodable Leading (RADL) picture, Random Access Skipped Leading (RASL) picture, Broken Link Access (BLA) picture, Instantaneous Decoding Refresh (IDR) picture, Clean Random Access (CRA) picture.

A Random Access Point (RAP) picture, which may also be referred to as an intra random access point (IRAP) picture in an independent layer contains only intra-coded slices. An IRAP picture belonging to a predicted layer may contain P, B, and I slices, cannot use inter prediction from other pictures in the same predicted layer, and may use inter-layer prediction from its direct reference layers. In the present version of HEVC, an IRAP picture may be a BLA picture, a CRA picture or an IDR picture. The first picture in a bitstream containing a base layer is an IRAP picture at the base layer. Provided the necessary parameter sets are available when they need to be activated, an IRAP picture at an independent layer and all subsequent non-RASL pictures at the independent layer in decoding order can be correctly decoded without performing the decoding process of any pictures that precede the IRAP picture in decoding order. The IRAP picture belonging to a predicted layer and all subsequent non-RASL pictures in decoding order within the same predicted layer can be correctly decoded without performing the decoding process of any pictures of the same predicted layer that precede the IRAP picture in decoding order, when the necessary parameter sets are available when they need to be activated and when the decoding of each direct reference layer of the predicted layer has been initialized. There may be pictures in a bitstream that contain only intra-coded slices that are not IRAP pictures.

A non-VCL NAL unit may be, for example, one of the following types: a sequence parameter set, a picture parameter set, a supplemental enhancement information (SEI) NAL unit, an access unit delimiter, an end of sequence NAL unit, an end of bitstream NAL unit, or a filler data NAL unit. Parameter sets may be needed for the reconstruction of decoded pictures, whereas many of the other non-VCL NAL units are not necessary for the reconstruction of decoded sample values.

Parameters that remain unchanged through a coded video sequence may be included in a sequence parameter set. In addition to the parameters that may be needed by the decoding process, the sequence parameter set may optionally contain video usability information (VUI), which includes parameters that may be important for buffering, picture output timing, rendering, and resource reservation. In HEVC a sequence parameter set RBSP includes parameters that can be referred to by one or more picture parameter set RBSPs or one or more SEI NAL units containing a buffering period SEI message. A picture parameter set contains such parameters that are likely to be unchanged in several coded pictures. A picture parameter set RBSP may include parameters that can be referred to by the coded slice NAL units of one or more coded pictures.

In HEVC, a video parameter set (VPS) may be defined as a syntax structure containing syntax elements that apply to zero or more entire coded video sequences as determined by the content of a syntax element found in the SPS referred to by a syntax element found in the PPS referred to by a syntax element found in each slice segment header.

A video parameter set RBSP may include parameters that can be referred to by one or more sequence parameter set RBSPs.

The relationship and hierarchy between video parameter set (VPS), sequence parameter set (SPS), and picture parameter set (PPS) may be described as follows. VPS resides one level above SPS in the parameter set hierarchy and in the context of scalability and/or 3D video. VPS may include parameters that are common for all slices across all (scalability or view) layers in the entire coded video sequence. SPS includes the parameters that are common for all slices in a particular (scalability or view) layer in the entire coded video sequence, and may be shared by multiple (scalability or view) layers. PPS includes the parameters that are common for all slices in a particular layer representation (the representation of one scalability or view layer in one access unit) and are likely to be shared by all slices in multiple layer representations.

VPS may provide information about the dependency relationships of the layers in a bitstream, as well as many other information that are applicable to all slices across all (scalability or view) layers in the entire coded video sequence. VPS may be considered to comprise two parts, the base VPS and a VPS extension, where the VPS extension may be optionally present.

Out-of-band transmission, signaling or storage can additionally or alternatively be used for other purposes than tolerance against transmission errors, such as ease of access or session negotiation. For example, a sample entry of a track in a file conforming to the ISO Base Media File Format may comprise parameter sets, while the coded data in the bitstream is stored elsewhere in the file or in another file.

The phrase along the bitstream (e.g. indicating along the bitstream) may be used in claims and described embodiments to refer to out-of-band transmission, signaling, or storage in a manner that the out-of-band data is associated with the bitstream. The phrase decoding along the bitstream or alike may refer to decoding the referred out-of-band data (which may be obtained from out-of-band transmission, signaling, or storage) that is associated with the bitstream.

A SEI NAL unit may contain one or more SEI messages, which are not required for the decoding of output pictures but may assist in related processes, such as picture output timing, rendering, error detection, error concealment, and resource reservation. Several SEI messages are specified in H.264/AVC and HEVC, and the user data SEI messages enable organizations and companies to specify SEI messages for their own use. H.264/AVC and HEVC contain the syntax and semantics for the specified SEI messages but no process for handling the messages in the recipient is defined. Consequently, encoders are required to follow the H.264/AVC standard or the HEVC standard when they create SEI messages, and decoders conforming to the H.264/AVC standard or the HEVC standard, respectively, are not required to process SEI messages for output order conformance. One of the reasons to include the syntax and semantics of SEI messages in H.264/AVC and HEVC is to allow different system specifications to interpret the supplemental information identically and hence interoperate. It is intended that system specifications can require the use of particular SEI messages both in the encoding end and in the decoding end, and additionally the process for handling particular SEI messages in the recipient can be specified.

In HEVC, there are two types of SEI NAL units, namely the suffix SEI NAL unit and the prefix SEI NAL unit, having a different nal_unit_type value from each other. The SEI message(s) contained in a suffix SEI NAL unit are associated with the VCL NAL unit preceding, in decoding order, the suffix SEI NAL unit. The SEI message(s) contained in a prefix SEI NAL unit are associated with the VCL NAL unit following, in decoding order, the prefix SEI NAL unit.

A coded picture is a coded representation of a picture. In HEVC, a coded picture may be defined as a coded representation of a picture containing all coding tree units of the picture. In HEVC, an access unit (AU) may be defined as a set of NAL units that are associated with each other according to a specified classification rule, are consecutive in decoding order, and contain at most one picture with any specific value of nuh_layer_id. In addition to containing the VCL NAL units of the coded picture, an access unit may also contain non-VCL NAL units. Said specified classification rule may for example associate pictures with the same output time or picture output count value into the same access unit.

A bitstream may be defined as a sequence of bits, in the form of a NAL unit stream or a byte stream, that forms the representation of coded pictures and associated data forming one or more coded video sequences. A first bitstream may be followed by a second bitstream in the same logical channel, such as in the same file or in the same connection of a communication protocol. An elementary stream (in the context of video coding) may be defined as a sequence of one or more bitstreams. The end of the first bitstream may be indicated by a specific NAL unit, which may be referred to as the end of bitstream (EOB) NAL unit and which is the last NAL unit of the bitstream. In HEVC and its current draft extensions, the EOB NAL unit is required to have nuh_layer_id equal to 0.

A coded video sequence may be defined as such a sequence of coded pictures in decoding order that is independently decodable and is followed by another coded video sequence or the end of the bitstream or an end of sequence NAL unit.

In HEVC, a coded video sequence may additionally or alternatively (to the specification above) be specified to end, when a specific NAL unit, which may be referred to as an end of sequence (EOS) NAL unit, appears in the bitstream and has nuh_layer_id equal to 0.

A group of pictures (GOP) and its characteristics may be defined as follows. A GOP can be decoded regardless of whether any previous pictures were decoded. An open GOP is such a group of pictures in which pictures preceding the initial intra picture in output order might not be correctly decodable when the decoding starts from the initial intra picture of the open GOP. In other words, pictures of an open GOP may refer (in inter prediction) to pictures belonging to a previous GOP. An HEVC decoder can recognize an intra picture starting an open GOP, because a specific NAL unit type, CRA NAL unit type, may be used for its coded slices. A closed GOP is such a group of pictures in which all pictures can be correctly decoded when the decoding starts from the initial intra picture of the closed GOP. In other words, no picture in a closed GOP refers to any pictures in previous GOPs. In H.264/AVC and HEVC, a closed GOP may start from an IDR picture. In HEVC a closed GOP may also start from a BLA_W_RADL or a BLA_N_LP picture. An open GOP coding structure is potentially more efficient in the compression compared to a closed GOP coding structure, due to a larger flexibility in selection of reference pictures.

A Structure of Pictures (SOP) may be defined as one or more coded pictures consecutive in decoding order, in which the first coded picture in decoding order is a reference picture at the lowest temporal sub-layer and no coded picture except potentially the first coded picture in decoding order is a RAP picture. All pictures in the previous SOP precede in decoding order all pictures in the current SOP and all pictures in the next SOP succeed in decoding order all pictures in the current SOP. A SOP may represent a hierarchical and repetitive inter prediction structure. The term group of pictures (GOP) may sometimes be used interchangeably with the term SOP and having the same semantics as the semantics of SOP.

A Decoded Picture Buffer (DPB) may be used in the encoder and/or in the decoder. There are two reasons to buffer decoded pictures, for references in inter prediction and for reordering decoded pictures into output order. As H.264/AVC and HEVC provide a great deal of flexibility for both reference picture marking and output reordering, separate buffers for reference picture buffering and output picture buffering may waste memory resources. Hence, the DPB may include a unified decoded picture buffering process for reference pictures and output reordering. A decoded picture may be removed from the DPB when it is no longer used as a reference and is not needed for output.

In many coding modes of H.264/AVC and HEVC, the reference picture for inter prediction is indicated with an index to a reference picture list. The index may be coded with variable length coding, which usually causes a smaller index to have a shorter value for the corresponding syntax element. In H.264/AVC and HEVC, two reference picture lists (reference picture list 0 and reference picture list 1) are generated for each bi-predictive (B) slice, and one reference picture list (reference picture list 0) is formed for each inter-coded (P) slice.

A reference picture list, such as the reference picture list 0 and the reference picture list 1, may be constructed in two steps: First, an initial reference picture list is generated. The initial reference picture list may be generated for example on the basis of frame_num, POC, temporal_id, or information on the prediction hierarchy such as a GOP structure, or any combination thereof. Second, the initial reference picture list may be reordered by reference picture list reordering (RPLR) syntax, also known as reference picture list modification syntax structure, which may be contained in slice headers. The initial reference picture lists may be modified through the reference picture list modification syntax structure, where pictures in the initial reference picture lists may be identified through an entry index to the list.

Many coding standards, including H.264/AVC and HEVC, may have decoding process to derive a reference picture index to a reference picture list, which may be used to indicate which one of the multiple reference pictures is used for inter prediction for a particular block. A reference picture index may be coded by an encoder into the bitstream in some inter coding modes or it may be derived (by an encoder and a decoder) for example using neighboring blocks in some other inter coding modes.

Several candidate motion vectors may be derived for a single prediction unit. For example, motion vector prediction HEVC includes two motion vector prediction schemes, namely the advanced motion vector prediction (AMVP) and the merge mode. In the AMVP or the merge mode, a list of motion vector candidates is derived for a PU. There are two kinds of candidates: spatial candidates and temporal candidates, where temporal candidates may also be referred to as TMVP candidates.

A candidate list derivation may be performed for example as follows, while it should be understood that other possibilities may exist for candidate list derivation. If the occupancy of the candidate list is not at maximum, the spatial candidates are included in the candidate list first, if they are available and not already exist in the candidate list. After that, if occupancy of the candidate list is not yet at maximum, a temporal candidate is Included in the candidate list. If the number of candidates still does not reach the maximum allowed number, the combined bi-predictive candidates (for B slices) and a zero motion vector are added in. After the candidate list has been constructed, the encoder decides the final motion information from candidates, for example, based on a rate-distortion optimization (RDO) decision and encodes the index of the selected candidate into the bitstream. Likewise, the decoder decodes the index of the selected candidate from the bitstream, constructs the candidate list, and uses the decoded index to select a motion vector predictor from the candidate list.

A motion vector anchor position may be defined as a position (e.g., horizontal and vertical coordinates) within a picture area relative to which the motion vector is applied. A horizontal offset and a vertical offset for the anchor position may be given in the slice header, slice parameter set, tile header, tile parameter set, or the like.

An48xamplee encoding method taking advantage of a motion vector anchor position comprises: encoding an input picture into a coded constituent picture; reconstructing, as a part of said encoding, a decoded constituent picture corresponding to the coded constituent picture; encoding a spatial region into a coded tile, the encoding comprising: determining a horizontal offset and a vertical offset indicative of a region-wise anchor position of the spatial region within the decoded constituent picture; encoding the horizontal offset and the vertical offset; determining that a prediction unit at position of a first horizontal coordinate and a first vertical coordinate of the coded tile is predicted relative to the region-wise anchor position, wherein the first horizontal coordinate and the first vertical coordinate are horizontal and vertical coordinates, respectively, within the spatial region; indicating that the prediction unit is predicted relative to a prediction-unit anchor position that is relative to the region-wise anchor position; deriving a prediction-unit anchor position equal to sum of the first horizontal coordinate and the horizontal offset, and the first vertical coordinate and the vertical offset, respectively; determining a motion vector for the prediction unit; and applying the motion vector relative to the prediction-unit anchor position to obtain a prediction block.

An example decoding method wherein a motion vector anchor position is used comprises: decoding a coded tile into a decoded tile, the decoding comprising: decoding a horizontal offset and a vertical offset; decoding an indication that a prediction unit at a position of a first horizontal coordinate and a first vertical coordinate of the coded tile is predicted relative to a prediction-unit anchor position that is relative to the horizontal and vertical offset; deriving a prediction-unit anchor position equal to sum of the first horizontal coordinate and the horizontal offset, and the first vertical coordinate and the vertical offset, respectively; determining a motion vector for the prediction unit; and applying the motion vector relative to the prediction-unit anchor position to obtain a prediction block.

Scalable video coding may refer to coding structure where one bitstream can contain multiple representations of the content, for example, at different bitrates, resolutions or frame rates. In these cases the receiver can extract the desired representation depending on its characteristics (e.g. resolution that matches best the display device). Alternatively, a server or a network element can extract the portions of the bitstream to be transmitted to the receiver depending on e.g. the network characteristics or processing capabilities of the receiver. A meaningful decoded representation can be produced by decoding only certain parts of a scalable bit stream. A scalable bitstream typically consists of a "base layer" providing the lowest quality video available and one or more enhancement layers that enhance the video quality when received and decoded together with the lower layers. In order to improve coding efficiency for the enhancement layers, the coded representation of that layer typically depends on the lower layers. E.g. the motion and mode information of the enhancement layer can be predicted from lower layers. Similarly the pixel data of the lower layers can be used to create prediction for the enhancement layer.

In some scalable video coding schemes, a video signal can be encoded into a base layer and one or more enhancement layers. An enhancement layer may enhance, for example, the temporal resolution (i.e., the frame rate), the spatial resolution, or simply the quality of the video content represented by another layer or part thereof. Each layer together with all its dependent layers is one representation of the video signal, for example, at a certain spatial resolution, temporal resolution and quality level. In this document, we refer to a scalable layer together with all of its dependent layers as a "scalable layer representation". The portion of a scalable bitstream corresponding to a scalable layer representation can be extracted and decoded to produce a representation of the original signal at certain fidelity.

Scalability modes or scalability dimensions may include but are not limited to the following:

- Quality scalability: Base layer pictures are coded at a lower quality than enhancement layer pictures, which may be achieved, for example, using a greater quantization parameter value (i.e., a greater quantization step size for transform coefficient quantization) in the base layer than in the enhancement layer. Quality scalability may further be categorized into fine-grain or fine-granularity scalability (FGS), medium-grain or medium-granularity scalability (MGS), and/or coarse-grain or coarse-granularity scalability (CGS), as described below.
- Spatial scalability: Base layer pictures are coded at a lower resolution (i.e. have fewer samples) than enhancement layer pictures. Spatial scalability and quality scalability, particularly its coarse-grain scalability type, may sometimes be considered the same type of scalability.
- View scalability, which may also be referred to as multiview coding. The base layer represents a first view, whereas an enhancement layer represents a second view. A view may be defined as a sequence of pictures representing one camera or viewpoint. It may be considered that in stereoscopic or two-view video, one video sequence or view is presented for the left eye while a parallel view is presented for the right eye.
- Depth scalability, which may also be referred to as depth-enhanced coding. A layer or some layers of a bitstream may represent texture view(s), while other layer or layers may represent depth view(s).

It should be understood that many of the scalability types may be combined and applied together.

The term layer may be used in context of any type of scalability, including view scalability and depth enhancements. An enhancement layer may refer to any type of an enhancement, such as SNR, spatial, multiview, and/or depth enhancement. A base layer may refer to any type of a base video sequence, such as a base view, a base layer for SNR/spatial scalability, or a texture base view for depth-enhanced video coding.

A sender, a gateway, a client, or another entity may select the transmitted layers and/or sub-layers of a scalable video bitstream. Terms layer extraction, extraction of layers, or layer down-switching may refer to transmitting fewer layers than what is available in the bitstream received by the sender, the gateway, the client, or another entity. Layer up-switching may refer to transmitting additional layer(s) compared to those transmitted prior to the layer up-switching by the sender, the gateway, the client, or another entity, i.e. restarting the transmission of one or more layers whose transmission was ceased earlier in layer down-switching. Similarly to layer down-switching and/or up-switching, the sender, the gateway, the client, or another entity may perform down- and/or up-switching of temporal sub-layers. The sender, the gateway, the client, or another entity may also perform both layer and sub-layer down-switching and/or up-switching. Layer and sub-layer down-switching and/or up-switching may be carried out in the same access unit or alike (i.e. virtually simultaneously) or may be carried out in different access units or alike (i.e. virtually at distinct times).

A scalable video encoder for quality scalability (also known as Signal-to-Noise or SNR) and/or spatial scalability may be implemented as follows. For a base layer, a conventional non-scalable video encoder and decoder may be used. The reconstructed/decoded pictures of the base layer are included in the reference picture buffer and/or reference picture lists for an enhancement layer. In case of spatial scalability, the reconstructed/decoded base-layer picture may be upsampled prior to its insertion into the reference picture lists for an enhancement-layer picture. The base layer decoded pictures may be inserted into a reference picture list(s) for coding/decoding of an enhancement layer picture similarly to the decoded reference pictures of the enhancement layer. Consequently, the encoder may choose a base-layer reference picture as an inter prediction reference and indicate its use with a reference picture index in the coded bitstream. The decoder decodes from the bitstream, for example from a reference picture index, that a base-layer picture is used as an inter prediction reference for the enhancement layer. When a decoded base-layer picture is used as the prediction reference for an enhancement layer, it is referred to as an inter-layer reference picture.

While the previous paragraph described a scalable video codec with two scalability layers with an enhancement layer and a base layer, it needs to be understood that the description can be generalized to any two layers in a scalability hierarchy with more than two layers. In this case, a second enhancement layer may depend on a first enhancement layer in encoding and/or decoding processes, and the first enhancement layer may therefore be regarded as the base layer for the encoding and/or decoding of the second enhancement layer. Furthermore, it needs to be understood that there may be inter-layer reference pictures from more than one layer in a reference picture buffer or reference picture lists of an enhancement layer, and each of these inter-layer reference pictures may be considered to reside in a base layer or a reference layer for the enhancement layer being encoded and/or decoded. Furthermore, it needs to be understood that other types of inter-layer processing than reference-layer picture upsampling may take place instead or additionally. For example, the bit-depth of the samples of the reference-layer picture may be converted to the bit-depth of the enhancement layer and/or the sample values may undergo a mapping from the color space of the reference layer to the color space of the enhancement layer.

A scalable video coding and/or decoding scheme may use multi-loop coding and/or decoding, which may be characterized as follows. In the encoding/decoding, a base layer picture may be reconstructed/decoded to be used as a motion-compensation reference picture for subsequent pictures, in coding/decoding order, within the same layer or as a reference for inter-layer (or inter-view or inter-component) prediction. The reconstructed/decoded base layer picture may be stored in the DPB. An enhancement layer picture may likewise be reconstructed/decoded to be used as a motion-compensation reference picture for subsequent pictures, in coding/decoding order, within the same layer or as reference for inter-layer (or inter-view or inter-component) prediction for higher enhancement layers, if any. In addition to reconstructed/decoded sample values, syntax element values of the base/reference layer or variables derived from the syntax element values of the base/reference layer may be used in the inter-layer/inter-component/inter-view prediction.

Inter-layer prediction may be defined as prediction in a manner that is dependent on data elements (e.g., sample values or motion vectors) of reference pictures from a different layer than the layer of the current picture (being encoded or decoded). Many types of inter-layer prediction exist and may be applied in a scalable video encoder/decoder. The available types of inter-layer prediction may for example depend on the coding profile according to which the bitstream or a particular layer within the bitstream is being encoded or, when decoding, the coding profile that the bitstream or a particular layer within the bitstream is indicated to conform to. Alternatively or additionally, the available types of inter-layer prediction may depend on the types of scalability or the type of an scalable codec or video coding standard amendment (e.g. SHVC, MV-HEVC, or 3D-HEVC) being used.

A direct reference layer may be defined as a layer that may be used for inter-layer prediction of another layer for which the layer is the direct reference layer. A direct predicted layer may be defined as a layer for which another layer is a direct reference layer. An indirect reference layer may be defined as a layer that is not a direct reference layer of a second layer but is a direct reference layer of a third layer that is a direct reference layer or indirect reference layer of a direct reference layer of the second layer for which the layer is the indirect reference layer. An indirect predicted layer may be defined as a layer for which another layer is an indirect reference layer. An independent layer may be defined as a layer that does not have direct reference layers. In other words, an independent layer is not predicted using inter-layer prediction. A non-base layer may be defined as any other layer than the base layer, and the base layer may be defined as the lowest layer in the bitstream. An independent non-base layer may be defined as a layer that is both an independent layer and a non-base layer.

Similarly to MVC, in MV-HEVC, inter-view reference pictures can be included in the reference picture list(s) of the current picture being coded or decoded. SHVC uses multi-loop decoding operation (unlike the SVC extension of H.264/AVC). SHVC may be considered to use a reference index based approach, i.e. an inter-layer reference picture can be included in a one or more reference picture lists of the current picture being coded or decoded (as described above).

For the enhancement layer coding, the concepts and coding tools of HEVC base layer may be used in SHVC, MV-HEVC, and/or alike. However, the additional inter-layer prediction tools, which employ already coded data (including reconstructed picture samples and motion parameters a.k.a motion information) in reference layer for efficiently coding an enhancement layer, may be integrated to SHVC, MV-HEVC, and/or alike codec.

A constituent picture may be defined as such part of an enclosing (de)coded picture that corresponds to a representation of an entire input picture. In addition to the constituent picture, the enclosing (de)coded picture may comprise other data, such as another constituent picture.

Frame packing may be defined to comprise arranging more than one input picture, which may be referred to as (input) constituent frames or constituent pictures, into an output picture. In general, frame packing is not limited to any particular type of constituent frames or the constituent frames need not have a particular relation with each other. In many cases, frame packing is used for arranging constituent frames of a stereoscopic video clip into a single picture sequence. The arranging may include placing the input pictures in spatially non-overlapping areas within the output picture. For example, in a side-by-side arrangement, two input pictures are placed within an output picture horizontally adjacently to each other. The arranging may also include partitioning of one or more input pictures into two or more constituent frame partitions and placing the constituent frame partitions in spatially non-overlapping areas within the output picture. The output picture or a sequence of frame-packed output pictures may be encoded into a bitstream e.g. by a video encoder. The bitstream may be decoded e.g. by a video decoder. The decoder or a post-processing operation after decoding may extract the decoded constituent frames from the decoded picture(s) e.g. for displaying.

Video coding specifications may contain a set of constraints for associating data units (e.g. NAL units in H.264/AVC or HEVC) into access units. These constraints may be used to conclude access unit boundaries from a sequence of NAL units. For example, the following is specified in the HEVC standard:

- An access unit consists of one coded picture with nuh_layer_id equal to 0, zero or more VCL NAL units with nuh_layer_id greater than 0 and zero or more non-VCL NAL units.
- Let firstBlPicNalUnit be the first VCL NAL unit of a coded picture with nuh_layer_id equal to 0. The first of any of the following NAL units preceding firstBlPicNalUnit and succeeding the last VCL NAL unit preceding firstBlPicNalUnit, if any, specifies the start of a new access unit:

- access unit delimiter NAL unit with nuh_layer_id equal to 0 (when present),
- VPS NAL unit with nuh_layer_id equal to 0 (when present),
- SPS NAL unit with nuh_layer_id equal to 0 (when present),
- PPS NAL unit with nuh_layer_id equal to 0 (when present),
- Prefix SEI NAL unit with nuh_layer_id equal to 0 (when present),
- NAL units with nal_unit_type in the range of RSV_NVCL41..RSV_NVCL44 with nuh_layer_id equal to 0 (when present),
- NAL units with nal_unit_type in the range of UNSPEC48..UNSPEC55 with nuh_layer_id equal to 0 (when present).
- The first NAL unit preceding firstBlPicNalUnit and succeeding the last VCL NAL unit preceding firstBlPicNalUnit, if any, can only be one of the above-listed NAL units.
- When there is none of the above NAL units preceding firstBlPicNalUnit and succeeding the last VCL NAL preceding firstBlPicNalUnit, if any, firstBlPicNalUnit starts a new access unit.
- Access unit boundary detection may be based on but may not be limited to one or more of the following:
- Detecting that a VCL NAL unit of a base-layer picture is the first VCL NAL unit of an access unit, e.g. on the basis that:
- the VCL NAL unit includes a block address or alike that is the first block of the picture in decoding order; and/or
- the picture order count, picture number, or similar decoding or output order or timing indicator differs from that of the previous VCL NAL unit(s).
- Having detected the first VCL NAL unit of an access unit, concluding based on pre-defined rules e.g. based on nal_unit_type which non-VCL NAL units that precede the first VCL NAL unit of an access unit and succeed the last VCL NAL unit of the previous access unit in decoding order belong to the access unit.

Some of the embodiments here are related to Versatile Video Coding (VVC). However, the present embodiments are not limited to VVC but may be applied with any video coding scheme or format that provides a picture partitioning mechanism similar to subpictures of WC.

A VVC subpicture is a rectangular region of one or more slices within a picture. An encoder may treat the subpicture boundaries like picture boundaries and may turn off loop filtering across the subpicture boundaries. Thus, it is possible to encode subpictures so that selected subpictures can be extracted from VVC bitstream(s) or merged to a destination WC bitstream. Furthermore, such VVC bitstream extraction or merging operations can be performed without modifications of the video coding layer (VCL) NAL units. The subpicture identifiers (IDs) for the subpictures that are present in the bitstream may be indicated in the sequence parameter set(s) or picture parameter set(s).

The subpicture feature of VVC allows for partitioning of the VVC bitstream in a flexible manner as multiple rectangles representing subpictures, where each subpicture comprises one or more slices. In other words, a subpicture may be defined as a rectangular region of one or more slices within a picture, wherein the one or more slices are complete. Consequently, a subpicture consists of one or more slices that collectively cover a rectangular region of a picture. The slices of a subpicture may be required to be rectangular slices.

In WC, the feature of subpictures enables efficient extraction of subpicture(s) from one or more bitstream and merging the extracted subpictures to form another bitstream without excessive penalty in compression efficiency and without modifications of VCL NAL units (i.e. slices).

The use of subpictures in a coded video sequence (CVS), however, requires appropriate configuration of the encoder and other parameters such as SPS/PPS and so on. In WC, a layout of partitioning of a picture to subpictures may be indicated in and/or decoded from an SPS. A subpicture layout may be defined as a partitioning of a picture to subpictures. In WC, the SPS syntax indicates the partitioning of a picture to subpictures by providing for each sub-picture syntax elements indicative of: the x and y coordinates of the top-left corner of the subpicture, the width of the subpicture, and the height of the sub-picture, in CTU units. One or more of the following properties may be indicated (e.g. by an encoder) or decoded (e.g. by a decoder) or inferred (e.g. by an encoder and/or a decoder) for the subpictures collectively or per each subpicture individually: i) whether or not a subpicture is treated like a picture in the decoding process (or equivalently, whether or not subpicture boundaries are treated like picture boundaries in the decoding process); in some cases, this property excludes in-loop filtering operations, which may be separately indicated/decoded/inferred; ii) whether or not in-loop filtering operations are performed across the subpicture boundaries. When a subpicture is treated like a picture in the decoding process, any references to sample locations outside the subpicture boundaries are saturated to be within the subpicture boundaries. This may be regarded being equivalent to padding samples outside sub-picture boundaries with the boundary sample values for decoding the subpicture. Consequently, motion vectors may be allowed to cause references outside subpicture boundaries in a subpicture that is extractable.

An independent subpicture (a.k.a. an extractable subpicture) may be defined as a subpicture i) with subpicture boundaries that are treated as picture boundaries and ii) without loop filtering across the subpicture boundaries. A dependent subpicture may be defined as a subpicture that is not an independent sub-picture.

In video coding, an isolated region may be defined as a picture region that is allowed to depend only on the corresponding isolated region in reference pictures and does not depend on any other picture regions in the current picture or in the reference pictures. The corresponding isolated region in reference pictures may be for example the picture region that collocates with the isolated region in a current picture. A coded isolated region may be decoded without the presence of any picture regions of the same coded picture.

A VVC subpicture with boundaries treated like picture boundaries may be regarded as an isolated region.

A motion-constrained tile set (MCTS) is a set of tiles such that the inter prediction process is constrained in encoding such that no sample value outside the MCTS, and no sample value at a fractional sample position that is derived using one or more sample values outside the motion-constrained tile set, is used for inter prediction of any sample within the motion-constrained tile set. Additionally, the encoding of an MCTS is constrained in a manner that no parameter prediction takes inputs from blocks outside the MCTS. For example, the encoding of an MCTS is constrained in a manner that motion vector candidates are not derived from blocks outside the MCTS. In HEVC, this may be enforced by turning off temporal motion vector prediction of HEVC, or by disallowing the encoder to use the temporal motion vector prediction (TMVP) candidate or any motion vector prediction candidate following the TMVP candidate in a motion vector candidate list for prediction units located directly left of the right tile boundary of the MCTS except the last one at the bottom right of the MCTS.

In general, an MCTS may be defined to be a tile set that is independent of any sample values and coded data, such as motion vectors, that are outside the MCTS. An MCTS sequence may be defined as a sequence of respective MCTSs in one or more coded video sequences or alike. In some cases, an MCTS may be required to form a rectangular area. It should be understood that depending on the context, an MCTS may refer to the tile set within a picture or to the respective tile set in a sequence of pictures. The respective tile set may be, but in general need not be, collocated in the sequence of pictures. A motion-constrained tile set may be regarded as an independently coded tile set, since it may be decoded without the other tile sets. An MCTS is an example of an isolated region.

In the current standard (ISO/IEC 23090-5) no information exists indicating if V3C tiles corresponds to a specific portion of V3C video component, for example the portion contained by MCTS in case of H.265 or by Subpictures in case of H.266.

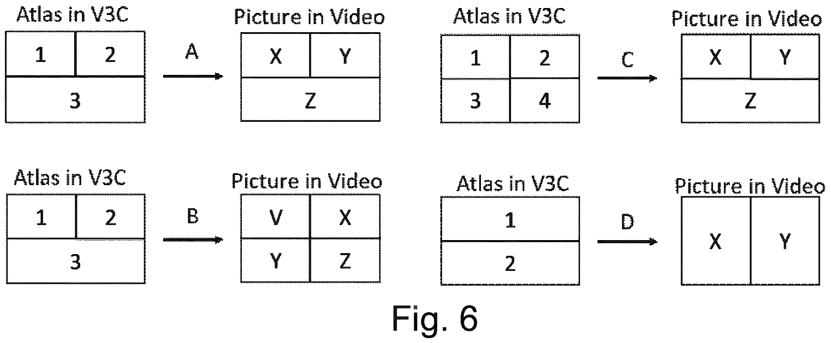

A system may not be able to guarantee that the V3C atlas tiles and partitions of V3C video components would be spatially aligned. Figure 6 illustrates examples of the possible mismatch between the portions of V3C atlas component tiles indicated by tile id and portions of V3C video component partitions indicated by MCTS or Subpictures.

- Case A: The arrow A illustrates an example where V3C tile ids and video partition identifiers (ids) don't match. In this example the atlas tile having the identifier id 1 can't be matched with the subpicture having the identifier with id 1, but could be matched with the subpicture having the identifier id X.
- Case B: The arrow B illustrates an example where one V3C tile (id 3) could spatially map to multiple video partitions (Y,Z).

- Case C: The arrow C illustrates an example where multiple V3C tiles (id 3, 4) could spatially map to one video partition indicated with the identifier Z in Figure 6.
- Case D: The arrow D illustrates an example where V3C tiles and video partitions might not be spatially aligned at all. This can be signaled in VUI (inside V3C bitstream) which is deeply placed in an atlas sequence parameter set (ASPS) and which may not be understood by an SDP parser.

Process of mapping V3C atlas tiles and video partitions (MCTS or Subpictures) is complex and requires parsing parameter sets of atlas data and video data before the relationship can be established.

- Mapping V3C tiles to atlas frame is defined through atlas frame parameter sets (AFPS)
- Mapping of VVC subpictures to picture frame is defined through sequence parameter sets (SPS) and picture parameter sets (PPS), where SPS defines the subpicture layout and PPS defines subpicture ids for the grid.
- Mapping of HEVC MCTS to picture frame is defined in the PPS. Where PPS defines the tiling grid and the slice segment header specifies the slice address within the picture frame.

As illustrated and discussed above, the process of mapping sub-bitstream partitions between different RTP streams could be significantly simplified, which would allow RTP parser to identify corresponding dependencies and not rely on V3C or video decoder to parse the relevant information from various parameter sets in individual streams.

Secondly, there is no indication in SDP that would explain if there is a relationship between atlas tiles or video partitions (similar to VUI in V3C). Consequently, a receiver does not know whether the atlas tile ids and video partition ids would be aligned, and if a receiver can make any smart processing that could balance the processing on the end device.

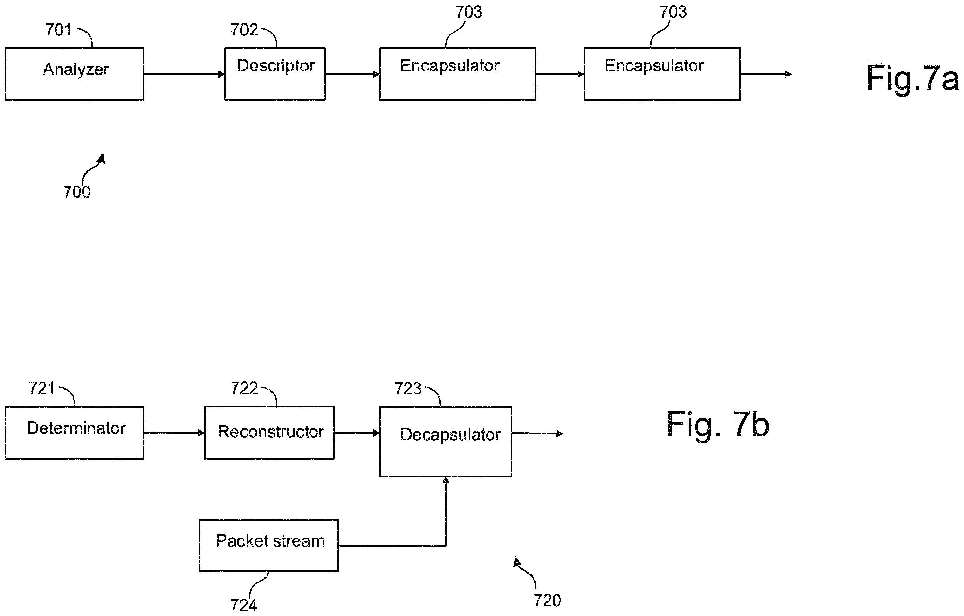

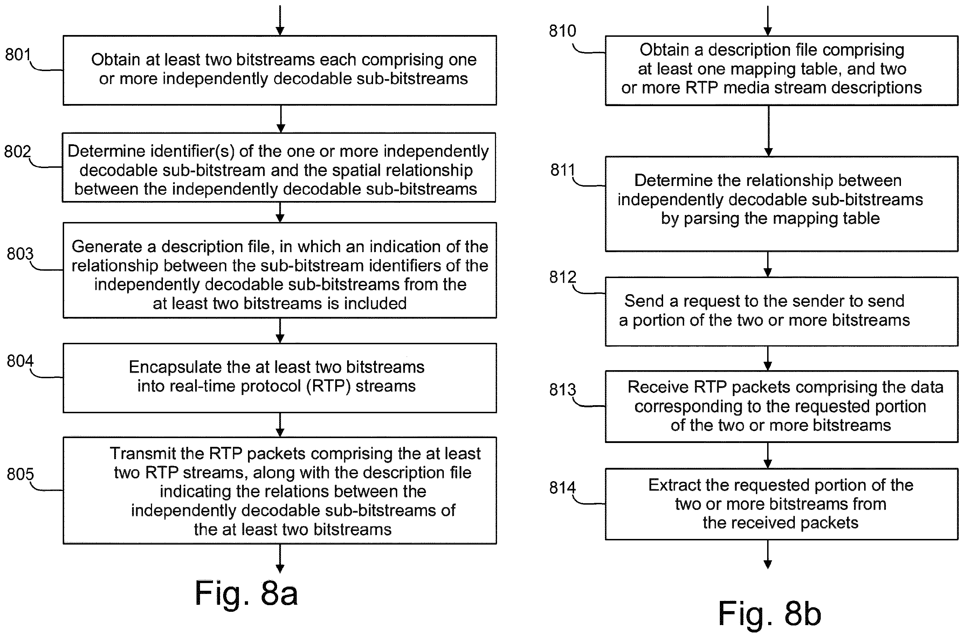

In the following, some embodiments for mapping media bitstream partitions in real-time streaming will be explained in more detail with refence to the block diagram of a sender 700 of figure 7a and the flow diagram of an encoding method in figure 8a, according to an embodiment.

The sender 700 obtains 801 at least two bitstreams each comprising one or more independently decodable sub-bitstreams. An analyzer 701 determines 802 identifier(s) of the one or more independently decodable sub-bitstream and the spatial relationship between the independently decodable sub-bitstreams of the at least two bitstreams. Then, a descriptor 702 generates 803 a description file, in which an indication of the relationship between the sub-bitstream identifiers of the independently decodable sub-bitstreams from the at least two bitstreams is included. The encapsulator 703 encapsulates 804 the at least two bitstreams into real-time protocol (RTP) streams.

The transmitter 704 of the sender 700 may then transmit 805 to a receiver 720 the RTP packets comprising the at least two RTP streams, along with the description file indicating the relations between the independently decodable sub-bitstreams of the at least two bitstreams.

In accordance with one embodiment, one of the at least two bitstreams is a V3C atlas bitstream consisting of one or more atlas tiles, and the sub-bitstream ids correspond to the atlas tile-ids. One of the at least two bitstreams is a video bitstream that corresponds to a V3C video component.

In accordance with one embodiment, the independently decodable video sub-bitstream in a video bitstream is a sub-bitstream corresponding to a subpicture in Versatile Video Coding (WC) bitstream and the sub-bitstream ids correspond to subpicture ids.

In an alternative embodiment, the independently decodable video sub-bitstream in a video bitstream is a sub-bitstream corresponding to a Motion Constrained Tile Set (MCTS) in High Efficiency Video Coding (HEVC) bitstream and the sub-bitstream ids correspond to slice-ids.

In accordance with one embodiment, the description file is a Session Description File (SDP).

In a dependent embodiment, a mapping table is defined by linking sub-bitstream ids between media bitstreams. Mapping table links partition ids such as atlas tile id from V3C atlas stream to video partition ids. Partitions are uniquely identified using a combination of the stream id such as <mid> and the sub-bitstream-id.

In a dependent embodiment, at least one mapping table is provided as a new session level attribute.

In an alternative embodiment, at least one mapping table is provided as a parameter to session level group attribute.

In accordance with one embodiment, a partition correlation type may be signaled in the description file, indicating how sub-bitstream identifiers between RTP media streams correlate spatially.

In the following, some embodiments for receiving and determining mapping between media bitstream partitions in real-time streaming will be explained in more detail with refence to the block diagram of a receiver 720 of figure 7b and the flow diagram of a decoding method in figure 8b, according to an embodiment.

The receiver 720 obtains 810 a description file comprising at least one mapping table, and two or more RTP media stream descriptions. A determinator 721 determines 811 the relationship between independently decodable sub-bitstreams by parsing the mapping table. Based on the determined relationship, the receiver 720 sends 812 a request to the sender 700 to send a portion of the two or more bitstreams. When the sender 700 has transmitted the requested portion, the receiver 720 receives 813 RTP packets comprising the data corresponding to the requested portion of the two or more bitstreams and a decapsulator 722 extracts 814 the requested portion of the two or more bitstreams from the received packets.

In accordance with one embodiment, one of the at least two RTP media streams descriptions represents a V3C atlas stream. The mapping table indicates the relationship of atlas tile identifiers to video component sub-bitstream ids. Hence, the receiver 720 is able to receive a sub-set of atlas tiles and their corresponding video sub-bitstreams 724. A reconstructor 723 reconstructs a partial three-dimensional (3D) representation based on the portion of the sub-bitstreams.

In one embodiment the request of portion of sub-bitstreams is done via SDP offer/answer mechanism.

The above described signaling improvements would allow client/receiver to understand how portions of sub-bitstreams from multiple bitstreams correlate between each other spatially. The signaling is intended to solve the problem that has been described above.

The solution above is focused on defining a mapping table that describes which sub-bitstreams from different RTP media streams correlate with each other spatially. The mapping table that defines the relationship between bitstream partitions may be defined in multiple ways. The table can exploit the unique mid media level attribute in combination with bitstream level unique partition identifiers. Depending on the media stream, the signaling of partition/sub-bitstream ids may be different.

The mid attribute may used as an identifier of the media described by the m= line i.e. a media-identifier attribute.

In accordance with one embodiment, the mapping table can be expressed as a session level attribute "partition-map" in a description file. The partition-map attribute could have the following syntax:

partition-map=<source-mid>:<partition-id>,<partition-id>;<destination-mid>:<partition-id>,<partition-id>,...;<destination-mid>:<partition-id>,<partition-id>; ...

The attribute provides one or more groups of values separated by semicolon (;). Each group consist of two sets of values separated by colon (:), where the first set indicates the media stream "mid" and the latter set indicates a list of comma (,) separated partition/sub-bitstream ids related to the media stream.

The first group in the attribute indicates the partition source (<mid>:<partition-id>). The succeeding groups indicate the partition destinations (<mid>:<partition-id>) to which the partition source maps to.

There can be more than one partition-map provided for a session.

Below is an illustration of this embodiment in an example SDP. The example describes how atlas tiles from V3C atlas stream (mid=4) are mapped to V3C video component sub-bitstreams (mid=1, mid=2, mid=3).

```
v=0
o=svcsrv 289083124 289083124 IN IP4 host.example.com
s=V3C SIGNALING
t=0 0
c=IN IP4 192.0.2.1/127
a=group:v3c 1 2 3 4 v3c-ptl-level-idc=10;
                        v3c-parameter-
set=AF6F00939921878;
a=partition-map=4:1;1:X;2:X;3:X;
a=partition-map=4:2;1:Y,Z;2:Y,Z;3:Y;
a=partition-map=4:3;1:Z;2:Z;
m=video 40000 RTP/AVP 96
a=rtpmap:96 H266/90000
a=fmtp:96 v3c-unit-header=10000000;
a=sendonly
a=mid:1
m=video 40002 RTP/AVP 96
a=rtpmap:96 H266/90000
a=fmtp:96 v3c-unit-header=18000000;
a=mid:2
a=sendonly
```

```
m=video 40004 RTP/AVP 96

a=rtpmap:96 H266/90000

a=fmtp:96 v3c-unit-header=20000000;

a=mid:3

a=sendonly

m=video 40006 RTP/AVP 100

a=rtpmap:100 v3c/90000

a=fmtp:100 v3c-unit-header=08000000;

a=mid:4

a=sendonly
```

The above example of the mapping table indicates (the three lines in italics: a=partition-map=4:1;1:X;2:X;3:X; a=partition-map=4:2; 1 :Y,Z;2:Y,Z;3:Y; a=partition-map=4:3;1:Z;2:Z;) that:

- V3C atlas tile with tile-id=1 spatially corresponds to a VVC encoded geometry sub-bitstream with sub-picture-id=X, an occupancy sub-bitstream with sub-picture-id=X and an attribute sub-bitstream with sub-picture-id=X.
- V3C atlas tile with tile-id=2 spatially corresponds to a VVC encoded geometry sub-bitstream with sub-picture-id=Y and sub-picture-id=Z, an occupancy sub-bitstream with sub-picture-id=Y and sub-picture-id=Z, and an attribute sub-bitstream with sub-picture-id=Y.
- V3C atlas tile with tile-id=3 spatially corresponds to a VVC encoded geometry sub-bitstream with sub-picture-id=Z, an occupancy sub-bitstream with sub-picture-id=Z and that there is no correlation to an attribute sub-bitstream.

In another embodiment the mapping table could be provided as a parameter of a:group attribute. This embodiment is illustrated in the example below.

```
v=0

o=svcsrv 289083124 289083124 IN IP4 host.example.com

s=V3C SIGNALING
```

```
t=0 0

c=IN IP4 192.0.2.1/127

a=group:v3c 1 2 3 4 v3c-ptl-level-idc=10;

      v3c-parameter-set=AF6F00939921878;

      partition-map=4:1 1:X 2:X 3:X;

      partition-map=4:2 1:Y,Z 2:Y,Z 3:Y;

      partition-map=4:3 1:Z 2:Z 3:Y,Z;

      vui_constrained_tiles_across_v3c_components_idc

m=video 40000 RTP/AVP 96

a=rtpmap:96 H266/90000

a=fmtp:96   v3c-unit-header=10000000;   sub-picture-
header-cap=1;

a=sendonly

a=mid:1

m=video 40002 RTP/AVP 96

a=rtpmap:96 H266/90000

a=fmtp:96      v3c-unit-header=18000000;sub-picture-
header-cap=1;

a=mid:2

a=sendonly

m=video 40004 RTP/AVP 96

a=rtpmap:96 H266/90000

a=fmtp:96 v3c-unit-header=20000000;

sub-picture-header-cap=1;

a=mid:3

a=sendonly

m=video 40006 RTP/AVP 100

a=rtpmap:100 v3c/90000
```

```
a=fmtp:100 v3c-unit-header=08000000;

    v3c-tile-id-pres=1; || v3c-tile-id=1,2,3;

a=extmap urn:ietf:params:rtp-hdrext:v3c:tile-id

a=mid:4

a=sendonly
```

Also in the above example the partition-map attributes indicate the mapping.

In one embodiment an indicator may be added in SDP that signals that there is a relationship between partitions (VIII for V3C). E.g. additional parameter in session level group attribute (a:group) such as vui_constrained_tiles_across_v3c_components_idc. An example of the signalling is presented below.

```
v=0

o=svcsrv 289083124 289083124 IN IP4 host.example.com

s=V3C SIGNALING

t=0 0

c=IN IP4 192.0.2.1/127

a=group:v3c 1 2 3 4 v3c-ptl-level-idc=10;

    v3c-parameter-set=AF6F00939921878;

    vui_constrained_tiles_across_v3c_components_idc=2

...
```

In one embodiment an indication may be added in the SDP, which signals that the partition ids between media streams correlate dimensionally and share the same identifiers. For example, this would allow easy signalling simply stating that atlas tile with the tile-id 1 dimensionally correlates with VVC encoded video component sub-bitstream with the sub-picture id 1. An example of the signalling can be found below. Different correlation types may be reserved to indicate different correlation. In the example below the parameter v3c-partition-id-correlation-type is used to indicate the correlation type for example as follows.

The value of the parameter v3c-partition-id-correlation-type equal to 1 could indicate that the partitions fully correspond spatially, the value equal to 0 could indicate that partitions don't correlate at all, the value equal to 2 could indicate that the source partition is contained by destination partitions, the value equal to 3 could indicate that the source partition contains the destination partitions, etc.

```
v=0

o=svcsrv 289083124 289083124 IN IP4 host.example.com

s=V3C SIGNALING

t=0 0

c=IN IP4 192.0.2.1/127

a=group:v3c 1 2 3 4 v3c-ptl-level-idc=10;

                v3c-parameter-set=AF6F00939921878;

        v3c-partition-id-correlation-type=1;

...
```

The solution presented above may have some benefits.

For example, mapping between V3C atlas tiles and video partitions is made trivial without needing to parse parameter sets from different media tracks to understand the complex relationship.

All video component sub-bitstreams can originate from the same media stream, wherein overall number of media streams to client could be reduced and utilization of the mapping may result in shorter SDP with less data replication.

Selective forwarding for multi-user use case may also be supported, wherein an entity in the selective forwarding unit rewrites the video SPS and V3C AFPS.

Simple scenarios such as the following may also be enabled: SDP including the partition mapping is provided to the client off-band, a client may figure out (e.g., through volumetric-annotation-SEI messages, which can be stored in SDP) that it only requires V3C atlas tiles 1 and 3. Furthermore, by using the provided mapping information, the client can directly request video sub-bitstreams X and Z that contain video coded data for the partitions needed.

The following describes in further detail suitable apparatus and possible mechanisms for implementing the embodiments of the invention. In this regard reference is first made to Fig. 12 which shows a schematic block diagram of an exemplary apparatus or electronic device 50 depicted in Fig. 13, which may incorporate a transmitter according to an embodiment of the invention.

The electronic device 50 may for example be a mobile terminal or user equipment of a wireless communication system. However, it would be appreciated that embodiments of the invention may be implemented within any electronic device or apparatus which may require transmission of radio frequency signals.

The apparatus 50 may comprise a housing 30 for incorporating and protecting the device. The apparatus 50 further may comprise a display 32 in the form of a liquid crystal display. In other embodiments of the invention the display may be any suitable display technology suitable to display an image or video. The apparatus 50 may further comprise a keypad 34. In other embodiments of the invention any suitable data or user interface mechanism may be employed. For example, the user interface may be implemented as a virtual keyboard or data entry system as part of a touch-sensitive display. The apparatus may comprise a microphone 36 or any suitable audio input which may be a digital or analogue signal input. The apparatus 50 may further comprise an audio output device which in embodiments of the invention may be any one of: an earpiece 38, speaker, or an analogue audio or digital audio output connection. The apparatus 50 may also comprise a battery 40 (or in other embodiments of the invention the device may be powered by any suitable mobile energy device such as solar cell, fuel cell or clockwork generator). The term battery discussed in connection with the embodiments may also be one of these mobile energy devices. Further, the apparatus 50 may comprise a combination of different kinds of energy devices, for example a rechargeable battery and a solar cell. The apparatus may further comprise an infrared port 41 for short range line of sight communication to other devices. In other embodiments the apparatus 50 may further comprise any suitable short range communication solution such as for example a Bluetooth wireless connection or a USB/FireWire wired connection.

The apparatus 50 may comprise a controller 56 or processor for controlling the apparatus 50. The controller 56 may be connected to memory 58 which in embodiments of the invention may store both data and/or may also store instructions for implementation on the controller 56. The controller 56 may further be connected to codec circuitry 54 suitable for carrying out coding and decoding of audio and/or video data or assisting in coding and decoding carried out by the controller 56.

The apparatus 50 may further comprise a card reader 48 and a smart card 46, for example a universal integrated circuit card (UICC) reader and a universal integrated circuit card for providing user information and being suitable for providing authentication information for authentication and authorization of the user at a network.

The apparatus 50 may comprise radio interface circuitry 52 connected to the controller and suitable for generating wireless communication signals for example for communication with a cellular communications network, a wireless communications system or a wireless local area network. The apparatus 50 may further comprise an antenna 60 connected to the radio interface circuitry 52 for transmitting radio frequency signals generated at the radio interface circuitry 52 to other apparatus(es) and for receiving radio frequency signals from other apparatus(es).

In some embodiments of the invention, the apparatus 50 comprises a camera 42 capable of recording or detecting imaging.

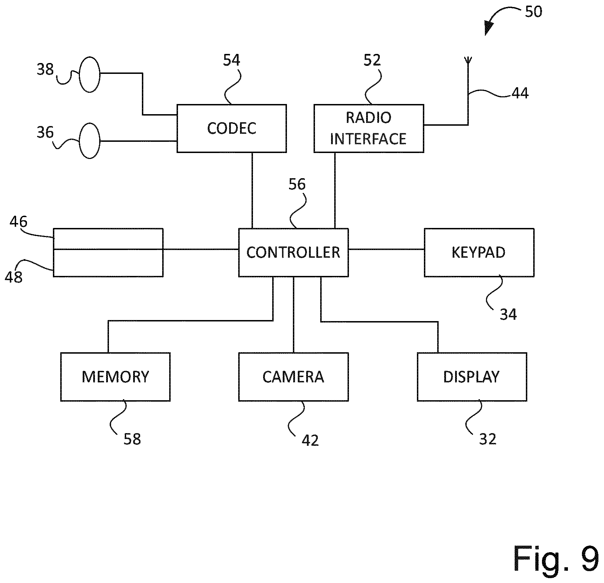

With respect to Figure 9, an example of a system within which embodiments of the present invention can be utilized is shown. The system 10 comprises multiple communication devices which can communicate through one or more networks. The system 10 may comprise any combination of wired and/or wireless networks including, but not limited to a wireless cellular telephone network (such as a global systems for mobile communications (GSM), universal mobile telecommunications system (UMTS), long term evolution (LTE) based network, code division multiple access (CDMA) network etc.), a wireless local area network (WLAN) such as defined by any of the IEEE 802.x standards, a Bluetooth personal area network, an Ethernet local area network, a token ring local area network, a wide area network, and the Internet.

For example, the system shown in Figure 9 shows a mobile telephone network 11 and a representation of the internet 28. Connectivity to the internet 28 may include, but is not limited to, long range wireless connections, short range wireless connections, and various wired connections including, but not limited to, telephone lines, cable lines, power lines, and similar communication pathways.

The example communication devices shown in the system 10 may include, but are not limited to, an electronic device or apparatus 50, a combination of a personal digital assistant (PDA) and a mobile telephone 14, a PDA 16, an integrated messaging device (IMD) 18, a desktop computer 20, a notebook computer 22, a tablet computer. The apparatus 50 may be stationary or mobile when carried by an individual who is moving. The apparatus 50 may also be located in a mode of transport including, but not limited to, a car, a truck, a taxi, a bus, a train, a boat, an airplane, a bicycle, a motorcycle or any similar suitable mode of transport.

Some or further apparatus may send and receive calls and messages and communicate with service providers through a wireless connection 25 to a base station 24. The base station 24 may be connected to a network server 26 that allows communication between the mobile telephone network 11 and the internet 28. The system may include additional communication devices and communication devices of various types.

The communication devices may communicate using various transmission technologies including, but not limited to, code division multiple access (CDMA), global systems for mobile communications (GSM), universal mobile telecommunications system (UMTS), time divisional multiple access (TDMA), frequency division multiple access (FDMA), transmission control protocol-internet protocol (TCP-IP), short messaging service (SMS), multimedia messaging service (MMS), email, instant messaging service (IMS), Bluetooth, IEEE 802.11, Long Term Evolution wireless communication technique (LTE) and any similar wireless communication technology. A communications device involved in implementing various embodiments of the present invention may communicate using various media including, but not limited to, radio, infrared, laser, cable connections, and any suitable connection.

The various embodiments can be implemented with the help of computer program code that resides in a memory and causes the relevant apparatuses to carry out the method. For example, a device may comprise circuitry and electronics for handling, receiving, and transmitting data, computer program code in a memory, and a processor that, when running the computer program code, causes the device to carry out the features of an embodiment. Yet further, a network device like a server may comprise circuitry and electronics for handling, receiving, and transmitting data, computer program code in a memory, and a processor that, when running the computer program code, causes the network device to carry out the features of a various embodiments.

**Claims**

1. An apparatus comprising:

    means (700) for obtaining at least two bitstreams each comprising one or more independently decodable sub-bitstreams, wherein one of the at least two bitstreams is a V3C atlas bitstream consisting of one or more atlas tiles, and the sub-bitstream identifiers correspond to atlas tile identifiers;
    means (701) for determining identifiers of the one or more independently decodable sub-bitstream;
    means (702) for generating a description file, in which an indication of the relationship between the sub-bitstream identifiers of the independently decodable sub-bitstreams from the at least two bitstreams is included;

means (703) for encapsulating the at least two bitstreams into real-time protocol streams; and

means (704) for transmitting the real-time protocol packets comprising the at least two real-time protocol streams along with the description file indicating the relations between the independently decodable sub-bitstreams of the at least two bitstreams;

**characterized in that** the means (701) for determining identifiers are further configured to determine a spatial relationship between the independently decodable sub-bitstreams of the at least two bitstreams, and configured to define a mapping table by linking sub-bitstream identifiers between media bitstreams, wherein the mapping table links sub-bitstream identifiers to video sub-bitstream identifiers.

2. The apparatus according to claim 1, wherein one of the at least two bitstreams is a video bitstream that corresponds to a V3C video component.

3. The apparatus according to claim 1, wherein the independently decodable video sub-bitstream in a video bitstream is a sub-bitstream corresponding to a subpicture in Versatile Video Coding bitstream and the sub-bitstream identifiers correspond to subpicture identifiers.

4. The apparatus according to claim 1, wherein the independently decodable video sub-bitstream in a video bitstream is a sub-bitstream corresponding to a Motion Constrained Tile Set in High Efficiency Video Coding bitstream and the sub-bitstream identifiers correspond to slice- identifiers.

5. The apparatus according to any of the claims 1 to 4, wherein the description file is a Session Description File.

6. The apparatus according to any of the claims 1 to 5, further wherein mapping is uniquely identified using a combination of the stream identifiers.

7. The apparatus according to claim 6, wherein the stream identifiers comprise a mid identifier and the sub-bitstream-identifiers.

8. The apparatus according to any of the claims 1 to 7, further comprising means for providing at least one mapping table as a session level attribute or as a parameter to a session level group attribute.

9. The apparatus according to any of the claims 1 to 8, wherein the sub-bitstreams are real-time protocol media streams, the apparatus further comprising means for signalling a sub-bitstream correlation type in the description file, indicating how the real-time protocol media streams correlate spatially.

10. A method, comprising:

obtaining (801) at least two bitstreams each comprising one or more independently decodable sub-bitstreams, wherein one of the at least two bitstreams is a V3C atlas bitstream consisting of one or more atlas tiles, and the sub-bitstream identifiers correspond to atlas tile identifiers;

determining (802) identifiers of the one or more independently decodable sub-bitstream

generating (803) a description file, in which an indication of the relationship between the sub-bitstream identifiers of the independently decodable sub-bitstreams from the at least two bitstreams is included;

encapsulating (804) the at least two bitstreams into real-time protocol streams; and

transmitting (805) the real-time protocol packets comprising the at least two real-time protocol streams along with the description file indicating the relations between the independently decodable sub-bitstreams of the at least two bitstreams;

**characterized in that** the method further comprises determining (802) a spatial relationship between the independently decodable sub-bitstreams of the at least two bitstreams, and

defining a mapping table by linking sub-bitstream identifiers between media bitstreams, wherein the mapping table links sub-bitstream identifiers to video sub-bitstream identifiers.

11. A computer program product comprising computer program code configured to, when executed on at least one processor, cause an apparatus to perform at least the following:

obtaining at least two bitstreams each comprising one or more independently decodable sub-bitstreams, wherein one of the at least two bitstreams is a V3C atlas bitstream consisting of one or more atlas tiles, and the sub-bitstream identifiers correspond to atlas tile identifiers;

determining identifiers of the one or more independently decodable sub-bitstream;

generating a description file, in which an indication of the relationship between the sub-bitstream identifiers of the independently decodable sub-bitstreams from the at least two bitstreams is included;

encapsulating the at least two bitstreams into real-time protocol streams; and

transmitting the real-time protocol packets comprising the at least two real-time protocol streams along with the description file indicating the relations between the independently decodable sub-bitstreams of the at least two bitstreams;

**characterized in that** the computer program product further comprises computer program code configured to, when executed on at least one processor, cause the apparatus to perform:

determining (802) a spatial relationship between the independently decodable sub-bitstreams of the at least two bitstreams, and

defining a mapping table by linking sub-bitstream identifiers between media bitstreams, wherein the mapping table links sub-bitstream identifiers to video sub-bitstream identifiers.

**12.** An apparatus comprising:

means (720) for obtaining a description file comprising at least one mapping table, and two or more RTP media stream descriptions;

means (720) for requesting from a sender a portion of the two or more bitstreams, wherein one of the at least two bitstreams is a V3C atlas bitstream consisting of one or more atlas tiles, and the sub-bitstream identifiers correspond to atlas tile identifiers; and

means (720) for receiving the requested portion of the two or more bitstreams;

**characterized in that** the mapping table links sub-bitstream identifiers to video sub-bitstream identifiers, wherein the apparatus further comprises:

means (721) for determining a relationship between independently decodable sub-bitstreams by parsing the mapping table.

**13.** A method, comprising:

obtaining (810) a description file comprising at least one mapping table, and two or more RTP media stream descriptions;

determining (811) a relationship between independently decodable sub-bitstreams by parsing the mapping table;

requesting (812) from a sender a portion of the two or more bitstreams, wherein one of the at least two bitstreams is a V3C atlas bitstream consisting of one or more atlas tiles; and

receiving (813) the requested portion of the two or more bitstreams;

**characterized in that** the mapping table links sub-bitstream identifiers to video sub-bitstream identifiers.

**14.** A computer program product comprising computer program code configured to, when executed on at least one processor, cause an apparatus to perform at least the following:

obtaining (810) a description file comprising at least one mapping table, and two or more RTP media stream descriptions;

determining (811) a relationship between independently decodable sub-bitstreams by parsing the mapping table;

requesting (812) from a sender a portion of the two or more bitstreams, wherein one of the at least two bitstreams is a V3C atlas bitstream consisting of one or more atlas tiles; and

receiving (813) the requested portion of the two or more bitstreams;

**characterized in that** the mapping table links sub-bitstream identifiers to video sub-bitstream identifiers.

**Patentansprüche**

**1.** Vorrichtung, die Folgendes umfasst:

Mittel (700) zum Erhalten von mindestens zwei Bitströmen, von denen jeder einen oder mehrere unabhängig decodierbare Unterbitströme umfasst, wobei einer der mindestens zwei Bitströme ein V3C-Atlasbitstrom ist, der aus einer oder mehreren Atlaskacheln besteht, und die Unterbitstromkennungen Atlaskachelkennungen entsprechen;

Mittel (701) zum Bestimmen von Kennungen des einen oder der mehreren unabhängig decodierbaren Unterbitströme;

Mittel (702) zum Erzeugen einer Beschreibungsdatei, in der eine Anzeige der Beziehung zwischen den Unterbitstromkennungen der unabhängig decodierbaren Unterbitströme aus den mindestens zwei Bitströmen beinhaltet ist;

Mittel (703) zum Kapseln der mindestens zwei Bitströme in Echtzeitprotokollströme; und

Mittel (704) zum Übertragen der Echtzeitprotokollpakete, die die mindestens zwei Echtzeitprotokollströme zusammen mit der Beschreibungsdatei umfassen, die die Beziehungen zwischen den unabhängig decodierbaren Unterbitströmen der mindestens zwei Bitströme anzeigt;

**dadurch gekennzeichnet, dass** die Mittel (701) zum Bestimmen von Kennungen ferner dazu ausgelegt sind, eine räumliche Beziehung zwischen den unabhängig decodierbaren Unterbitströmen der mindestens zwei Bitströme zu bestimmen, und dazu ausgelegt, durch Verbinden von Unterbitstromkennungen zwischen Medienbitströmen eine Zuordnungstabelle zu definieren, wobei die Zuordnungstabelle Unterbitstromkennungen mit Videounterbitstromkennungen verbindet.

2. Vorrichtung nach Anspruch 1, wobei einer der mindestens zwei Bitströme ein Videobitstrom ist, der einer V3C-Videokomponente entspricht.

3. Vorrichtung nach Anspruch 1, wobei der unabhängig decodierbare Videounterbitstrom in einem Videobitstrom ein Unterbitstrom ist, der einem Unterbild eines Versatile-Video-Coding-Bitstroms entspricht, und die Unterbitstromkennungen Unterbildkennungen entsprechen.

4. Vorrichtung nach Anspruch 1, wobei der unabhängig decodierbare Videounterbitstrom in einem Videobitstrom ein Unterbitstrom ist, der einem Motion-Constrained-Tile-Set in einem High-Efficiency-Video-Coding-Bitstrom entspricht, und die Unterbitstromkennungen Slicekennungen entsprechen.

5. Vorrichtung nach einem der Ansprüche 1 bis 4, wobei die Beschreibungsdatei eine Sitzungsbeschreibungsdatei ist.

6. Vorrichtung nach einem der Ansprüche 1 bis 5, ferner wobei eine Zuordnung unter Verwendung einer Kombination der Stromkennungen eindeutig identifiziert wird.

7. Vorrichtung nach Anspruch 6, wobei die Stromkennungen eine Mittelkennung und die Unterbitstromkennungen umfassen.

8. Vorrichtung nach einem der Ansprüche 1 bis 7, die ferner Mittel zum Bereitstellen von mindestens einer Zuordnungstabelle als ein Sitzungsebenenattribut oder als einen Parameter für ein Sitzungsebenengruppenattribut umfasst.

9. Vorrichtung nach einem der Ansprüche 1 bis 8, wobei die Unterbitströme Echtzeitprotokollmedienströme sind, wobei die Vorrichtung ferner Mittel zum Signalisieren eines Unterbitstromkorrelationstyps in der Beschreibungsdatei umfasst, der anzeigt, wie die Echtzeitprotokollmedienströme räumlich korrelieren.

10. Verfahren, das Folgendes umfasst:

Erhalten (801) von mindestens zwei Bitströmen, von denen jeder einen oder mehrere unabhängig decodierbare Unterbitströme umfasst, wobei einer der mindestens zwei Bitströme ein V3C-Atlasbitstrom ist, der aus einer oder mehreren Atlaskacheln besteht, und die Unterbitstromkennungen Atlaskachelkennungen entsprechen;

Bestimmen (802) von Kennungen des einen oder der mehreren unabhängig decodierbaren Unterbitströme

Erzeugen (803) einer Beschreibungsdatei, in der eine Anzeige der Beziehung zwischen den Unterbitstromkennungen der unabhängig decodierbaren Unterbitströme aus den mindestens zwei Bitströmen beinhaltet ist;

Kapseln (804) der mindestens zwei Bitströme in Echtzeitprotokollströme; und

Übertragen (805) der Echtzeitprotokollpakete, die die mindestens zwei Echtzeitprotokollströme zusammen mit der Beschreibungsdatei umfassen, die die Beziehungen zwischen den unabhängig decodierbaren Unterbitströmen der mindestens zwei Bitströme anzeigt;

**dadurch gekennzeichnet, dass** das Verfahren ferner das Bestimmen (802) einer räumlichen Beziehung zwischen den unabhängig decodierbaren Unterbitströmen der mindestens zwei Bitströme umfasst, und Definieren einer Zuordnungstabelle durch Verbinden von Unterbitstromkennungen zwischen Medienbitströmen, wobei die Zuordnungstabelle Unterbitstromkennungen mit Videounterbitstromkennungen verbindet.

11. Computerprogrammprodukt, das Computerprogrammcode umfasst, der dazu ausgelegt ist, wenn er auf mindestens einem Prozessor ausgeführt wird, eine Vorrichtung zu Folgendem zu veranlassen:

Erhalten von mindestens zwei Bitströmen, von denen jeder einen oder mehrere unabhängig decodierbare Unterbitströme umfasst, wobei einer der mindestens zwei Bitströme ein V3C-Atlasbitstrom ist, der aus einer oder mehreren Atlaskacheln besteht, und die Unterbitstromkennungen Atlaskachelkennungen entsprechen;
Bestimmen von Kennungen des einen oder der mehreren unabhängig decodierbaren Unterbitströme;
Erzeugen einer Beschreibungsdatei, in der eine Anzeige der Beziehung zwischen den Unterbitstromkennungen der unabhängig decodierbaren Unterbitströme aus den mindestens zwei Bitströmen beinhaltet ist;
Kapseln der mindestens zwei Bitströme in Echtzeitprotokollströme; und
Übertragen der Echtzeitprotokollpakete, die die mindestens zwei Echtzeitprotokollströme zusammen mit der Beschreibungsdatei umfassen, die die Beziehungen zwischen den unabhängig decodierbaren Unterbitströmen der mindestens zwei Bitströme anzeigt;
**dadurch gekennzeichnet, dass** das Computerprogrammprodukt ferner Computerprogrammcode umfasst, der dazu ausgelegt ist, wenn er auf mindestens einem Prozessor ausgeführt wird, eine Vorrichtung zu veranlassen, Folgendes durchzuführen:

Bestimmen (802) einer räumlichen Beziehung zwischen den unabhängig decodierbaren Unterbitströmen der mindestens zwei Bitströme, und
Definieren einer Zuordnungstabelle durch Verbinden von Unterbitstromkennungen zwischen Medienbitströmen, wobei die Zuordnungstabelle Unterbitstromkennungen mit Videounterbitstromkennungen verbindet.

12. Vorrichtung, die Folgendes umfasst:

Mittel (720) zum Erhalten einer Beschreibungsdatei, die mindestens eine Zuordnungstabelle umfasst, und von zwei oder mehr RTP-Medienstrombeschreibungen;
Mittel (720) zum Anfordern eines Abschnitts der zwei oder mehr Bitströme bei einem Absender, wobei einer der mindestens zwei Bitströme ein V3C-Atlasbitstrom ist, der aus einer oder mehreren Atlaskacheln besteht, und die Unterbitstromkennungen Atlaskachelkennungen entsprechen; und
Mittel (720) zum Empfangen des angeforderten Abschnitts der zwei oder mehr Bitströme;
**dadurch gekennzeichnet, dass** die Zuordnungstabelle Unterbitstromkennungen mit Videounterbitstromkennungen verbindet, wobei die Vorrichtung ferner Folgendes umfasst:
Mittel (721) zum Bestimmen einer Beziehung zwischen unabhängig decodierbaren Unterbitströmen durch Parsen der Zuordnungstabelle.

13. Verfahren, das Folgendes umfasst:

Erhalten (810) einer Beschreibungsdatei, die mindestens eine Zuordnungstabelle umfasst, und von zwei oder mehr RTP-Medienstrombeschreibungen;
Bestimmen (811) einer Beziehung zwischen unabhängig decodierbaren Unterbitströmen durch Parsen der Zuordnungstabelle;
Anfordern (812) eines Abschnitts der zwei oder mehr Bitströme bei einem Absender, wobei einer der mindestens zwei Bitströme ein V3C-Atlasbitstrom ist, der aus einer oder mehreren Atlaskacheln besteht; und
Empfangen (813) des angeforderten Abschnitts der zwei oder mehr Bitströme;
**dadurch gekennzeichnet, dass** die Zuordnungstabelle Unterbitstromkennungen mit Videounterbitstromkennungen verbindet.

14. Computerprogrammprodukt, das Computerprogrammcode umfasst, der dazu ausgelegt ist, wenn er auf mindestens einem Prozessor ausgeführt wird, eine Vorrichtung zu Folgendem zu veranlassen:

Erhalten (810) einer Beschreibungsdatei, die mindestens eine Zuordnungstabelle umfasst, und von zwei oder mehr RTP-Medienstrombeschreibungen;
Bestimmen (811) einer Beziehung zwischen unabhängig decodierbaren Unterbitströmen durch Parsen der Zuordnungstabelle;
Anfordern (812) eines Abschnitts der zwei oder mehr Bitströme bei einem Absender, wobei einer der mindestens zwei Bitströme ein V3C-Atlasbitstrom ist, der aus einer oder mehreren Atlaskacheln besteht; und
Empfangen (813) des angeforderten Abschnitts der zwei oder mehr Bitströme;

**dadurch gekennzeichnet, dass** die Zuordnungstabelle Unterbitstromkennungen mit Videounterbitstromkennungen verbindet.

**Revendications**

1.  Appareil comprenant :

    des moyens (700) pour obtenir au moins deux trains de bits comprenant chacun un ou plusieurs sous-trains de bits décodables indépendamment, dans lequel un des au moins deux trains de bits est un train de bits d'atlas V3C composé d'une ou plusieurs tuiles d'atlas, et les identifiants de sous-trains de bits correspondent à des identifiants de tuiles d'atlas ;
    des moyens (701) pour déterminer des identifiants des un ou plusieurs sous-trains de bits décodables indépendamment ;
    des moyens (702) pour générer un fichier de description dans lequel est incluse une indication de la relation entre les identifiants de sous-trains de bits des sous-trains de bits décodables indépendamment provenant des au moins deux trains de bits ;
    des moyens (703) pour encapsuler les au moins deux trains de bits dans des flux de protocole en temps réel ; et
    des moyens (704) pour transmettre les paquets de protocole en temps réel comprenant les au moins deux flux de protocole en temps réel en même temps que le fichier de description indiquant les relations entre les sous-trains de bits décodables indépendamment des au moins deux trains de bits ;
    **caractérisé en ce que** les moyens (701) pour déterminer des identifiants sont en outre configurés pour déterminer une relation spatiale entre les sous-trains de bits décodables indépendamment des au moins deux trains de bits, et configurés pour définir une table de mappage en reliant des identifiants de sous-trains de bits entre des trains de bits multimédia, dans lequel la table de mappage relie des identifiants de sous-trains de bits à des identifiants de sous-trains de bits vidéo.

2.  Appareil selon la revendication 1, dans lequel un des au moins deux trains de bits est un train de bits vidéo correspondant à une composante vidéo V3C.

3.  Appareil selon la revendication 1, dans lequel le sous-train de bits vidéo décodable indépendamment dans un train de bits vidéo est un sous-train de bits correspondant à une sous-image dans un train de bits de vidéocodage polyvalent, et les identifiants de sous-trains de bits correspondent à des identifiants de sous-images.

4.  Appareil selon la revendication 1, dans lequel le sous-train de bits vidéo décodable indépendamment dans un train de bits vidéo est un sous-train de bits correspondant à un ensemble de tuiles à contrainte de mouvement dans un train de bits de vidéocodage à haute efficacité, et les identifiants de sous-trains de bits correspondent à des identifiants de tranches.

5.  Appareil selon l'une des revendications 1 à 4, dans lequel le fichier de description est un fichier de description de session.

6.  Appareil selon l'une des revendications 1 à 5, dans lequel en outre, le mappage est identifié de manière unique à l'aide d'une combinaison d'identifiants de flux.

7.  Appareil selon la revendication 6, dans lequel les identifiants de flux comprennent un identifiant intermédiaire et les identifiants de sous-trains de bits.

8.  Appareil selon l'une des revendications 1 à 7, comprenant en outre des moyens pour fournir au moins une table de mappage en tant qu'attribut de niveau de session ou en tant que paramètre à un attribut de groupe de niveau de session.

9.  Appareil selon l'une des revendications 1 à 8, dans lequel les sous-trains de bits sont des flux multimédias de protocole en temps réel, l'appareil comprenant en outre des moyens pour signaler un type de corrélation de sous-train de bits dans le fichier de description indiquant comment les flux multimédias de protocole en temps réel sont corrélés dans l'espace.

10. Procédé, comprenant :

l'obtention (801) d'au moins deux trains de bits comprenant chacun un ou plusieurs sous-trains de bits décodables indépendamment, dans lequel un des au moins deux trains de bits est un train de bits d'atlas V3C composé d'une ou plusieurs tuiles d'atlas, et les identifiants de sous-trains de bits correspondent à des identifiants de tuiles d'atlas ;

la détermination (802) d'identifiants des un ou plusieurs sous-trains de bits décodables indépendamment ;

la génération (803) d'un fichier de description dans lequel est incluse une indication de la relation entre les identifiants de sous-trains de bits des sous-trains de bits décodables indépendamment provenant des au moins deux trains de bits ;

l'encapsulation (804) des au moins deux trains de bits dans des flux de protocole en temps réel ; et

la transmission (805) des paquets de protocole en temps réel comprenant les au moins deux flux de protocole en temps réel en même temps que le fichier de description indiquant les relations entre les sous-trains de bits décodables indépendamment des au moins deux trains de bits ;

**caractérisé en ce que** le procédé comprend en outre la détermination (802) d'une relation spatiale entre les sous-trains de bits décodables indépendamment des au moins deux trains de bits, et

la définition d'une table de mappage en reliant des identifiants de sous-trains de bits entre des trains de bits multimédia, dans lequel la table de mappage relie des identifiants de sous-trains de bits à des identifiants de sous-trains de bits vidéo.

11. Produit de programme informatique comprenant un code de programme informatique configuré pour, lorsqu'il est exécuté sur au moins un processeur, amener un appareil à effectuer au moins ce qui suit :

obtenir au moins deux trains de bits comprenant chacun un ou plusieurs sous-trains de bits décodables indépendamment, dans lequel un des au moins deux trains de bits est un train de bits d'atlas V3C composé d'une ou plusieurs tuiles d'atlas, et les identifiants de sous-trains de bits correspondent à des identifiants de tuiles d'atlas ;

déterminer des identifiants des un ou plusieurs sous-trains de bits décodables indépendamment ;

générer un fichier de description dans lequel est incluse une indication de la relation entre les identifiants de sous-trains de bits des sous-trains de bits décodables indépendamment provenant des au moins deux trains de bits ;

encapsuler les au moins deux trains de bits dans des flux de protocole en temps réel ; et

transmettre les paquets de protocole en temps réel comprenant les au moins deux flux de protocole en temps réel en même temps que le fichier de description indiquant les relations entre les sous-trains de bits décodables indépendamment des au moins deux trains de bits ;

**caractérisé en ce que** le produit de programme informatique comprend en outre un code de programme informatique configuré pour, lorsqu'il est exécuté sur au moins un processeur, amener l'appareil à effectuer :

la détermination (802) d'une relation spatiale entre les sous-trains de bits décodables indépendamment des au moins deux trains de bits, et

la définition d'une table de mappage en reliant des identifiants de sous-trains de bits entre des trains de bits multimédia, dans lequel la table de mappage relie des identifiants de sous-trains de bits à des identifiants de sous-trains de bits vidéo.

12. Appareil comprenant :

des moyens (720) pour obtenir un fichier de description comprenant au moins une table de mappage et deux descriptions de flux multimédias RTP ou plus ;

des moyens (720) pour demander une partie des deux trains de bits ou plus à un expéditeur, dans lequel un des au moins deux trains de bits est un train de bits d'atlas V3C composé d'une ou plusieurs tuiles d'atlas, et les identifiants de sous-trains de bits correspondent à des identifiants de tuiles d'atlas ; et

des moyens (720) pour recevoir la partie demandée des deux trains de bits ou plus ;

**caractérisé en ce que** la table de mappage relie des identifiants de sous-trains de bits à des identifiants de sous-trains de bits vidéo, dans lequel l'appareil comprend en outre :

des moyens (721) pour déterminer une relation entre des sous-trains de bits décodables indépendamment en analysant la table de mappage.

13. Procédé, comprenant :

l'obtention (810) d'un fichier de description comprenant au moins une table de mappage et deux descriptions de flux multimédias RTP ou plus ;

la détermination (811) d'une relation entre des sous-trains de bits décodables indépendamment en analysant la table de mappage ;

la demande (812) d'une partie des deux trains de bits ou plus à un expéditeur, dans lequel un des au moins deux trains de bits est un train de bits d'atlas V3C composé d'une ou plusieurs tuiles d'atlas ; et

la réception (813) de la partie demandée des deux trains de bits ou plus ;

**caractérisé en ce que** la table de mappage relie des identifiants de sous-trains de bits à des identifiants de sous-trains de bits vidéo.

**14.** Produit de programme informatique comprenant un code de programme informatique configuré pour, lorsqu'il est exécuté sur au moins un processeur, amener un appareil à effectuer au moins ce qui suit :

obtenir (810) un fichier de description comprenant au moins une table de mappage et deux descriptions de flux multimédias RTP ou plus ;

déterminer (811) une relation entre des sous-trains de bits décodables indépendamment en analysant la table de mappage ;

demander (812) une partie des deux trains de bits ou plus à un expéditeur, dans lequel un des au moins deux trains de bits est un train de bits d'atlas V3C composé d'une ou plusieurs tuiles d'atlas ; et

recevoir (813) la partie demandée des deux trains de bits ou plus ;

**caractérisé en ce que** la table de mappage relie des identifiants de sous-trains de bits à des identifiants de sous-trains de bits vidéo.

Fig. 1

Fig. 2

**V3C Sample Stream**

| |
|---|
| V3C Sample Stream Precision |
| V3C Sample Stream Size |
| **V3C_VPS** |
| v3c_parameter_set( ) |
| V3C Sample Stream Size |
| **V3C_AD** |
| atlas_sub_bitstream( ) |
| V3C Sample Stream Size |
| **V3C_OVD** |
| video_sub_bitstream( ) |
| V3C Sample Stream Size |
| **V3C_GVD** |
| video_sub_bitstream( ) |
| V3C Sample Stream Size |
| **V3C_AVD** |
| video_sub_bitstream( ) |
| V3C Sample Stream Size |
| **V3C_CAD** |
| atlas_sub_bitstream( ) |
| V3C Sample Stream Size |
| **V3C_PVD** |
| video_sub_bitstream( ) |

**NAL Sample Stream**

| |
|---|
| NAL Unit Size Precision |
| NAL Unit Size |
| **NAL_ASPS** |
| atlas_sequence_parameter_set_rbsp( ) |
| NAL Unit Size |
| **NAL_AAPS** |
| atlas_adaptation_parameter_set_rbsp( ) |
| NAL Unit Size |
| **NAL_AFPS** |
| atlas_frame_parameter_set_rbsp( ) |
| NAL Unit Size |
| **NAL_PREFIX_ESEI** |
| sei_rbsp( ) |
| NAL Unit Size |
| **ACL NAL unit type** |
| atlas_tile_layer_rbsp( ) |
| NAL Unit Size |
| **ACL NAL unit type** |
| atlas_tile_layer_rbsp( ) |
| NAL Unit Size |
| **NAL_SUFFIX_ESEI** |
| sei_rbsp( ) |

**Atlas Tile Layer**

| |
|---|
| **I_TILE** |
| I_INTRA |
| patch_data_unit( ) |
| ⋮ |
| I_INTRA |
| patch_data_unit( ) |
| I_RAW |
| raw_patch_data_unit( ) |
| I_EOM |
| eom_patch_data_unit( ) |
| I_END |

| |
|---|
| **P_TILE** |
| P_SKIP |
| skip_patch_data_unit( ) |
| P_MERGE |
| merge_patch_data_unit( ) |
| P_INTER |
| inter_patch_data_unit( ) |
| ⋮ |
| P_INTRA |
| patch_data_unit( ) |
| P_RAW |
| raw_patch_data_unit( ) |
| P_EOM |
| eom_patch_data_unit( ) |
| P_END |

Legend:
- v3c_unit_header( )
- v3c_unit_payload( )
- nal_unit_header( )
- atlas_tile_header( )
- atlas_tile_data_unit( )
- patch_information_data( )

Fig. 3

Fig. 4

| Offsets | Octet | 0 | | | | | | | | 1 | | | | | | | | 1 | | | | | | | | 3 | | | | | | | |
|---------|-------|---|---|---|---|---|---|---|---|---|---|---|---|---|---|---|---|---|---|---|---|---|---|---|---|---|---|---|---|---|---|---|---|
| Octet | Bit | 00 | 01 | 02 | 03 | 04 | 05 | 06 | 07 | 08 | 09 | 10 | 11 | 12 | 13 | 14 | 15 | 16 | 17 | 18 | 19 | 20 | 21 | 22 | 23 | 24 | 25 | 26 | 27 | 28 | 29 | 30 | 31 |
| 0 | 0 | Version | | P | X | CC | | | | PT | | | | | | | | Sequence number | | | | | | | | | | | | | | | |
| 4 | 32 | Timestamp | | | | | | | | | | | | | | | | | | | | | | | | | | | | | | | |
| 8 | 64 | SSRC identifier | | | | | | | | | | | | | | | | | | | | | | | | | | | | | | | |
| 12 | 96 | CSRC identifiers ... | | | | | | | | | | | | | | | | | | | | | | | | | | | | | | | |
| 12+4×CC | 128+ 32×CC | Profile-specific extension header ID | | | | | | | | | | | | | | | | Extension header length | | | | | | | | | | | | | | | |
| 16+4×CC | 128+ 32×CC | Extension header ... | | | | | | | | | | | | | | | | | | | | | | | | | | | | | | | |

Fig. 5

EP 4 300 984 B1

Atlas in V3C

| 1 | 2 |
|---|---|
| 3 | |

→ A →

Picture in Video

| X | Y |
|---|---|
| Z | |

Atlas in V3C

| 1 | 2 |
|---|---|
| 3 | 4 |

→ C →

Picture in Video

| X | Y |
|---|---|
| Z | |

Atlas in V3C

| 1 | 2 |
|---|---|
| 3 | |

→ B →

Picture in Video

| V | X |
|---|---|
| Y | Z |

Atlas in V3C

| 1 |
|---|
| 2 |

→ D →

Picture in Video

| X | Y |
|---|---|

# Fig. 6

EP 4 300 984 B1

EP 4 300 984 B1

Fig.7a

Fig. 7b

801 — Obtain at least two bitstreams each comprising one or more independently decodable sub-bitstreams

802 — Determine identifier(s) of the one or more independently decodable sub-bitstream and the spatial relationship between the independently decodable sub-bitstreams

803 — Generate a description file, in which an indication of the relationship between the sub-bitstream identifiers of the independently decodable sub-bitstreams from the at least two bitstreams is included

804 — Encapsulate the at least two bitstreams into real-time protocol (RTP) streams

805 — Transmit the RTP packets comprising the at least two RTP streams, along with the description file indicating the relations between the independently decodable sub-bitstreams of the at least two bitstreams

## Fig. 8a

810 — Obtain a description file comprising at least one mapping table, and two or more RTP media stream descriptions

811 — Determine the relationship between independently decodable sub-bitstreams by parsing the mapping table

812 — Send a request to the sender to send a portion of the two or more bitstreams

813 — Receive RTP packets comprising the data corresponding to the requested portion of the two or more bitstreams

814 — Extract the requested portion of the two or more bitstreams from the received packets

## Fig. 8b

Fig. 9

**EP 4 300 984 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ILOLA L. et al.** RTP Payload Format for Visual Volumetric Video-based Coding (V3C). *IETF Datatracker,* 27 June 2022